# EUROPEAN PATENT APPLICATION

(11) **EP 4 372 046 A1**
(43) Date of publication of application: **22.05.2024**
(21) Application number: 22876979.0
(22) Date of filing: 30.09.2022
(51) Int. Cl.: C08L 23/12, C08L 53/00, C08F 297/02, C08F 212/08, C08F 210/14, C08F 4/64, C08F 4/46

(54) **MULTI-BLOCK COPOLYMER, RESIN COMPOSITION, AND METHOD FOR MANUFACTURING SAME**

(30) Priority: 01.10.2021 KR 20210130757; 01.10.2021 KR 20210130758; 29.09.2022 KR 20220124448; 29.09.2022 KR 20220124449
(71) Applicant: LG Chem, Ltd., Yeongdeungpo-gu Seoul 07336 (KR)
(72) Inventor: PARK, Ji Hyun, Daejeon 34122 (KR); PARK, Jung Won, Daejeon 34122 (KR); KIM, Chang Jong, Daejeon 34122 (KR); SHIN, Eun Ji, Daejeon 34122 (KR); SA, Seok Pil, Daejeon 34122 (KR); IM, Seul Ki, Daejeon 34122 (KR); LEE, Hyun Mo, Daejeon 34122 (KR); KIM, Yun Kon, Daejeon 34122 (KR)
(74) Representative: Hoffmann Eitle
(86) International application number: PCT/KR2022/014838
(87) International publication number: WO 2023/055208

(57) **Abstract**

The present invention relates to a multi-block copolymer, a method for preparing same, and a thermoplastic resin composition comprising polypropylene and the multi-block copolymer. The block copolymer has excellent processability and excellent compatibility with polypropylene. Accordingly, a thermoplastic resin composition of the present invention, to which same is applied, exhibits excellent low-temperature impact strength, and thus, can be usefully used as a thermoplastic resin composition in the manufacture of products requiring high impact resistance, such as automobile parts.

## Description

### TECHNICAL FIELD

The present application claims the benefit of priority based on Korean Patent Application Nos. 10-2021-0130757 and 10-2021-0130758, filed on October 1, 2021, and Korean Patent Application Nos. 10-2022-0124448 and 10-2022-0124449, filed on September 29, 2022, the entire contents of which are incorporated herein by reference.

The present invention relates to a multiblock copolymer and a method for preparing same, more particularly, to a polyolefin-polystyrene-based multiblock copolymer including a polystyrene-based block and a polyolefin-based block and a method for preparing same.

### BACKGROUND ART

Block copolymers are materials widely used in even high-tech devices as well as typical plastics, and research and development thereon is being actively conducted. Particularly, styrene-olefin copolymer resins including both a polyolefin-based (POs) block and a polystyrene-based (PSs) block have excellent properties of heat resistance, light resistance, elasticity, or the like, and are usefully used in wide variety of technical fields.

A market of a hundreds of thousands of tons scale is now formed in the world on polyolefin-polystyrene block copolymers, for example, styrene-ethylene-butylene-styrene (SEES) or styrene-ethylene-propylene-styrene (SEPS). Typically, a polystyrene-block-poly(ethylene-co-1-butene)-block polystyrene (SEES) triblock copolymer may be exemplified as one of the styrene-olefin copolymer resins. A hard polystyrene domain is separated from a soft poly(ethylene-co-1-butene) matrix in the structure of the SEBS triblock copolymer and acts as a physical crosslinking site, and thermoplastic elastomer properties are shown. According to such properties, SEES is more broadly used in a product group requiring rubber and plastic, and according to the expansion of a using range, there is a significant increase in demand.

Meanwhile, in order to express a sense of luxury of the interior materials of automobiles, a method of injecting a resin composition composed of polycarbonate and acrylonitrile-butadiene-styrene (ABS) and attaching an epidermal material thereto, has been used, but there are problems in that processes are complicated, and the unit cost of the product increases.

Accordingly, a polypropylene-based resin composition including polypropylene (PP) as a main component, an impact reinforcing agent and an inorganic filler has been utilized. Polypropylene has excellent rigidity and molding processability and is widely used as a material for interior and exterior parts of automobiles, but has defects of weak impact strength.

A polypropylene-based resin composition using an ethylene-α-olefin copolymer has balanced physical properties of impact strength, elasticity, and flexural strength and has merits of good moldability and affordable price, but has limits in securing impact resistance according to diverse environments of use.

In addition, besides, a styrene-based thermoplastic elastomer of styrene-ethylene-butylene-styrene (SEES) has been used in a polypropylene-based resin composition, but SEES is expensive and significantly degrades the flowability of polypropylene, and there are problems of arising flow marks or short shots.

Accordingly, the development of a thermoplastic resin composition maintaining high flow properties of polypropylene without deteriorating mechanical properties is still required.

### [Prior Art Document]

### [Patent Document]

(Patent Document 1) Korean Registration Patent No. 10-1657925

### DISCLOSURE OF THE INVENTION

### TECHNICAL PROBLEM

The task to solve in the present invention is to provide a multiblock copolymer having excellent processability and including a polystyrene-based block and a polyolefin-based block.

Another task to solve of the present invention is to provide a thermoplastic resin composition having high flow properties and excellent low temperature impact strength.

### TECHNICAL SOLUTION

In order to solve the above-described tasks, the present invention provides a multiblock copolymer, a method for preparing the multiblock copolymer, and a resin composition including polypropylene and the multiblock copolymer.
(1) The present invention provides a multiblock copolymer comprising a polystyrene-based block comprising a repeating unit derived from an aromatic vinyl-based monomer, and a polyolefin-based block comprising a repeating unit derived from ethylene and a repeating unit derived from an alpha-olefin-based monomer, wherein the multiblock copolymer has a liquid-like ordering phase and a lamellar phase, the liquid-like ordering phase has a domain size (R) of 15.0 nm to 22.0 nm and a distance between domains (D1) of 40.0 nm to 60.0 nm, and the lamellar phase has a domain size (T) of 2.0 nm to 9.0 nm and a distance between domains (D2) of 10.0 nm to 50.0 nm, where the domain size and the distance between domains are measured by small angle X-ray scattering.
(2) The present invention provides the multiblock copolymer according to (1), wherein the multiblock copolymer has the liquid-like ordering phase as a major phase, and the lamellar phase as a minor phase.
(3) The present invention provides the multiblock copolymer according to (1) or (2), wherein the alpha-olefin-based monomer is an alpha-olefin-based monomer of 5 to 20 carbon atoms.
(4) The present invention provides the multiblock copolymer according to any one of (1) to (3), wherein the alpha-olefin-based monomer is one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-itocene, 4,4-dimethyl-1-pentene, 4,4-diethyl-1-hexene and 3,4-dimethyl-1-hexene.
(5) The present invention provides the multiblock copolymer according to any one of (1) to (4), wherein the multiblock copolymer has the domain size (R) of the liquid-like ordering phase of 15.0 nm to 20.0 nm.
(6) The present invention provides the multiblock copolymer according to any one of (1) to (5), wherein the multiblock copolymer has the distance between domains (D1) of the liquid-like ordering phase of 43.0 nm to 56.0 nm.
(7) The present invention provides the multiblock copolymer according to any one of (1) to (6), wherein the multiblock copolymer has the domain size (T) of the lamellar phase of 2.0 nm to 5.0 nm.
(8) The present invention provides the multiblock copolymer according to any one of (1) to (7), wherein the multiblock copolymer has the distance between domains (D2) of the lamellar phase of 12.0 nm to 43.0 nm.
(9) The present invention provides a method for preparing the multiblock copolymer according to (1), comprising: (S1) a step of reacting ethylene and an alpha-olefin-based monomer using an organozinc compound as a chain transfer agent in the presence of a catalyst composition comprising a transition metal compound to prepare a polyolefin-based block; and (S2) a step of reacting an aromatic vinyl-based monomer and the polyolefin-based block in the presence of an anionic polymerization initiator to prepare a multiblock copolymer.
(10) The present invention provides the method for preparing the multiblock copolymer according to (9), wherein the transition metal compound is a compound represented by Formula 1. 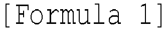 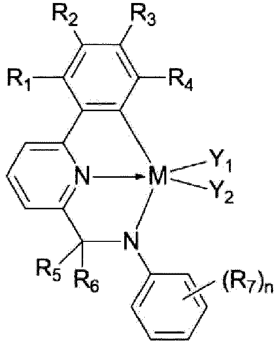 In Formula 1,
   M is Ti, Zr or Hf,
   R₁ to R₄ are each independently hydrogen, a substituted or unsubstituted alkyl group of 1 to 20 carbon atoms, a substituted or unsubstituted cycloalkyl group of 3 to 20 carbon atoms, or a substituted or unsubstituted aryl group of 6 to 20 carbon atoms, where adjacent two or more among them may be connected to form a ring;
   R₅ and R₆ are each independently hydrogen, a substituted or unsubstituted alkyl group of 1 to 20 carbon atoms, a substituted or unsubstituted cycloalkyl group of 3 to 20 carbon atoms, or a substituted or unsubstituted aryl group of 6 to 20 carbon atoms, where the substitution is conducted with an alkyl group of 1 to 12 carbon atoms;
   each R₇ is independently a substituted or unsubstituted alkyl group of 4 to 20 carbon atoms, a substituted or unsubstituted cycloalkyl group of 4 to 20 carbon atoms, or a substituted or unsubstituted aryl group of 6 to 20 carbon atoms;
   n is 1 to 5; and
   Y₁ and Y₂ are each independently a halogen group, an alkyl group of 1 to 20 carbon atoms, an alkenyl group of 2 to 20 carbon atoms, an alkynyl group of 2 to 20 carbon atoms, a cycloalkyl group of 3 to 20 carbon atoms, an aryl group of 6 to 20 carbon atoms, an alkylaryl group of 7 to 20 carbon atoms, an arylalkyl group of 7 to 20 carbon atoms, a heteroaryl group of 5 to 20 carbon atoms, an alkoxy group of 1 to 20 carbon atoms, a substituted or unsubstituted aryloxy group of 5 to 20 carbon atoms, an alkylamino group of 1 to 20 carbon atoms, an arylamino group of 5 to 20 carbon atoms, an alkylthio group of 1 to 20 carbon atoms, an arylthio group of 5 to 20 carbon atoms, an alkylsilyl group of 1 to 20 carbon atoms, an arylsilyl group of 5 to 20 carbon atoms, a hydroxyl group, an amino group, a thiol group, a silyl group, a cyano group, or a nitro group.
(11) The present invention provides the method for preparing the multiblock copolymer according to (9) or (10), wherein the organozinc compound is represented by Formula 5.

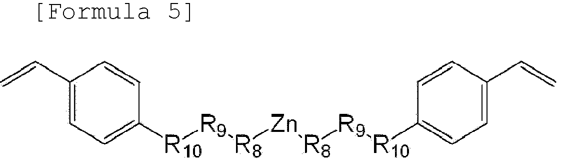

In Formula 5,
   R₈ and R₁₀ are each independently a single bond or an alkylene group of 1 to 10 carbon atoms, R₉ is an alkylene group of 1 to 10 carbon atoms or -SiR₁₁R₁₂-, and R₁₁ and R₁₂ are each independently an alkyl group of 1 to 10 carbon atoms.
(12) The present invention provides the method for preparing the multiblock copolymer according to any one of (9) to (11), wherein the anionic polymerization initiator comprises an alkyllithium compound comprising an allyl group, and the allyl group is combined with lithium.
(13) The present invention provides the method for preparing the multiblock copolymer according to (12), wherein the alkyllithium compound is represented by Formula 11. 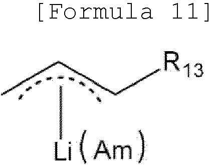 In Formula 11,
   R₁₃ is hydrogen or a hydrocarbon group of 1 to 20 carbon atoms, and
   Am is an amine-based compound represented by Formula 12. 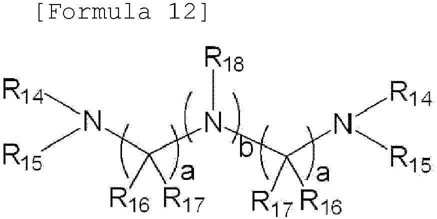 In Formula 12,
   R₁₄ to R₁₈ are each independently hydrogen or a hydrocarbon group of 1 to 20 carbon atoms, and
   a and b are each independently an integer of 0 to 3, where a and b are not 0 at the same time.
(14) The present invention provides a thermoplastic resin composition comprising polypropylene and the multiblock copolymer according to any one of (1) to (8).
(15) The present invention provides the thermoplastic resin composition according to (14), wherein the polypropylene and the multiblock copolymer are comprised in a weight ratio of 1:0.1 to 1:9.
(16) The present invention provides the thermoplastic resin composition according to (14) or (15), wherein the thermoplastic resin composition satisfies the following conditions a) to c):
   a) a height of a stress change (tan δ) peak in accordance with temperature, derived by dynamic viscoelasticity analysis is 0.02 to 0.13; b) a radius (Rv) of a dispersion phase is 0.10 um to 0.50 µm; and c) a glass transition temperature (Tg) is -60°C to -30°C.
(17) The present invention provides the thermoplastic resin composition according to any one of (14) to (16), wherein the thermoplastic resin composition satisfies b) the radius (Rv) of the dispersion phase of 0.10 um to 0.27 um.

### ADVANTAGEOUS EFFECTS

The multiblock copolymer provided in the present invention shows excellent processability and may be usefully utilized for the manufacture of various molded articles and resin compositions using the multiblock copolymer.

In addition, the thermoplastic resin composition provided in the present invention uses polypropylene and a multiblock copolymer having excellent compatibility with the polypropylene, and shows excellent low temperature impact strength, and accordingly, may be usefully used as a thermoplastic resin composition for manufacturing products requiring high impact resistance such as automobile parts.

### BEST MODE FOR CARRYING OUT THE INVENTION

Hereinafter, the present invention will be described in more detail to assist the understanding of the present invention.

It will be understood that words or terms used in the description and claims of the present invention shall not be interpreted as the meaning defined in commonly used dictionaries. It will be understood that the words or terms should be interpreted as having a meaning that is consistent with their meaning in the technical idea of the invention, based on the principle that an inventor may properly define the meaning of the words to best explain the invention.

In the present description, "alkyl" means a hydrocarbon residual group of a linear chain or branched chain.

In the present invention, "alkyl" means a hydrocarbon residual group of a linear chain or branched chain.

In the present invention, "alkenyl" means an alkenyl group of a linear chain or branched chain.

In the present invention, "aryl" preferably has 6 to 20 carbon atoms, and particularly includes phenyl, naphthyl, anthracenyl, pyridyl, dimethylanilinyl, anisolyl, or the like, without limitation.

In the present invention, "alkylaryl" means an aryl group substituted with the alkyl group.

In the present invention, "arylalkyl" means an alkyl group substituted with the aryl group.

In the present invention, "alkylsilyl" may be silyl substituted with alkyl of 1 to 20 carbon atoms, for example, trimethylsilyl or triethylsilyl.

In the present invention, "alkylamino" means an amino group substituted with the alkyl group and may include a dimethylamino group, a diethylamino group, or the like, without limitation.

In the present invention, "hydrocarbyl" means a monovalent hydrocarbon group of 1 to 20 carbon atoms, composed of only carbon and hydrogen irrespective of its structure, including alkyl, aryl, alkenyl, alkynyl, cycloalkyl, alkylaryl or arylalkyl, unless otherwise mentioned.

In the present description, the term "composition" includes a mixture of materials including the corresponding composition as well as reaction products and decomposition products formed from the material of the corresponding composition.

In the present description, the term "polymer" refers to a polymer compound prepared by polymerizing monomers irrespective of the same type or different types. Like this, the general term polymer covers the term homopolymer that is generally used to refer to a polymer prepared by only one type of a monomer, and the term interpolymer prescribed below.

In the present description, the term "copolymer" refers to a polymer prepared by the polymerization of at least two different monomers.

In the present description, numerical 0 in places below a decimal point "." may be omitted.

Hereinafter, the present invention will be explained in detail.

### Multiblock copolymer

The multiblock copolymer of the present invention is a multiblock copolymer including a polystyrene-based block including a repeating unit derived from an aromatic vinyl-based monomer and a polyolefin-based block including a repeating unit derived from ethylene and a repeating unit derived from an alpha-olefin-based monomer, and the multiblock copolymer is characterized in having a liquid-like ordering phase and a lamellar phase, wherein the liquid-like ordering phase has a domain size (R) of 15.0 nm to 22.0 nm and a distance between domains (D1) of 40.0 nm to 60.0 nm, the lamellar phase has a domain size (T) of 2.0 nm to 9.0 nm and a distance between domains (D2) of 10.0 nm to 50.0 nm, and the domain size and the distance between domains are measured by small angle X-ray scattering.

If small angle X-ray scattering (SAXS) and transmission electron microscope (TEM) analysis are utilized, the microstructure and the morphology of a polymer and/or a copolymer may be figured out. Particularly, through indexing by the analysis through the small angle X-ray scattering (SAXS), the phase of a polymer could be anticipated, and if fitting is performed supposing a model on the diffraction peak of a SAXS pattern, information on a polymer structure such as the domain size and the distance between domains in a specific phase could be secured. In addition, by analyzing a transmission electron microscope (TEM) image together, polymer morphology could be understood.

The multiblock copolymer of the present invention is prepared by using a specific transition metal compound having a novel structure as a catalyst, as described later, and has the liquid-like ordering phase as a major phase and the lamellar phase as a minor phase in the analysis through the small angle X-ray scattering (SAXS). Through indexing by the analysis through the small angle X-ray scattering (SAXS), a major phase and a minor phase could be distinguished. The intensity of the minor phase is relatively very small when compared to the major phase, and they could be distinguished.

In the description of the present invention, the domain size of the liquid-like ordering phase is represented by R, distance between domains is represented by D1, and the liquid-like ordering phase of the multiblock copolymer of the present invention has the domain size (R) of 15.0 nm to 22.0 nm and the distance between domains (D1) of 40.0 nm to 60.0 nm.

In addition, in the multiblock copolymer according to an embodiment of the present invention, the domain size (R) of the liquid-like ordering phase may particularly be 15.0 nm or more, 15.2 nm or more, 15.5 nm or more and 22.0 nm or less, 21 nm or less, 20.5 nm or less, 20.0 nm or less, 19.5 nm or less, 19.0 nm or less, more particularly, 15.0 nm to 20.0 nm, 15.0 nm to 19.0 nm, 15.5 nm to 20.0 nm, or 15.5 nm to 19.0 nm.

In addition, in the multiblock copolymer according to an embodiment of the present invention, the distance between domains (D1) of the liquid-like ordering phase may particularly be 40.0 nm or more, 40.5 nm or more, 41.0 nm or more, 41.5 nm or more, 42.0 nm or more, 42.5 nm or more, 43.0 nm or more and 59.0 nm or less, 58.0 nm or less, 57.0 nm or less, 56.0 nm or less, 55.5 nm or less, 55.0 nm or less, more particularly, 42.5 nm to 56.0 nm, 42.5 nm to 55.5 nm, 42.5 nm to 55.0 nm, 43.0 nm to 56.0 nm or 43.0 nm to 55.0 nm.

In the description of the present invention, the domain size of the lamellar phase is represented by T, distance between domains is represented by D2, and the lamellar phase of the multiblock copolymer of the present invention has the domain size (T) of 2.0 nm to 9.0 nm and the distance between domains (D2) of 10.0 nm to 50.0 nm.

In addition, in the multiblock copolymer according to an embodiment of the present invention, the domain size (T) of the lamellar phase may particularly be 2.0 nm to 8.0 nm, 2.0 nm to 7.0 nm, 2.0 nm to 6.0 nm, 2.0 nm to 5.0 nm, 2.0 nm to 4.5 nm, 2.2 nm to 8.0 nm, 2.2 nm to 7.0 nm, 2.2 nm to 6.0 nm, 2.2 nm to 5.0 nm, 2.2 nm to 4.5 nm, more particularly, 2.2 nm to 4.0 nm.

In addition, in the multiblock copolymer according to an embodiment of the present invention, the distance between domains (D2) of the lamellar phase may particularly be 10.0 nm or more, 10.5 nm or more, 11.0 nm or more, 11.5 nm or more, 12.0 nm or more, and 48.0 nm or less, 46.0 nm or less, 45.0 nm or less, 44.0 nm or less, 43.0 nm or less, more particularly, 11.0 nm to 44.0 nm, 11.5 nm to 44.0 nm, 12.0 nm to 44.0 nm, or 12.0 nm to 43.0 nm.

As described above, the domain size and the distance between domains are measured by small angle X-ray scattering, and the ranges of the domain size and the distance between domains are information on the microstructure of the multiblock copolymer of the present invention to specify the nature of the multiblock copolymer of the present invention.

The excellent processability of the multiblock copolymer of the present invention could be confirmed through the melt flow index of a resin composition prepared during preparing a thermoplastic resin composition through mixing with polypropylene. The multiblock copolymer of the present invention, satisfying the above-described ranges may show excellent miscibility during preparing a resin composition by mixing with polypropylene, and the resin composition thus prepared may maintain excellent flow properties. Particularly, when preparing a resin composition by mixing the multiblock copolymer of the present invention with polypropylene in a weight ratio of 1:0.11 to 1:9, the resin composition thus prepared may show a melt flow rate (MFR, 230°C, 2.16 kg) of 20 g/10 min to 100 g/10 min. The melt flow rate may be a melt flow rate shown by a thermoplastic resin composition including the polypropylene and the multiblock copolymer in a weight ratio of 1:0.11 to 1:4, 1:0.11 to 1:3, 1:0.11 to 1:2.4, 1:0.11 to 1:1.5, 1:0.11 to 1:1, 1:0.17 to 1:1.5, 1:0.17 to 1:1, more particularly, 1:0.17 to 1:0.25.

If the resin composition includes the polypropylene and the multiblock copolymer in a weight ratio of 1:0.25, the melt flow rate may particularly be 20 g/10 min or more, 20.5 g/10 min or more, 21.0 g/10 min or more, and 100 g/10 min or less, 90 g/10 min or less, 80 g/10 min or less, 70 g/10 min or less, 60 g/10 min or less, 50 g/10 min or less, 40 g/10 min or less, 30 g/10 min or less. The melt flow rate is measured according to ASTM-D 1238 under conditions of 230°C and a load of 2.16 kg.

The weight average molecular weight (Mw) of the multiblock copolymer may be 100,000 g/mol to 300,000 g/mol, particularly, 105,000 g/mol or more, and 300,000 g/mol or less, 250,000 g/mol or less, more particularly, 120,000 g/mol to 240,000 g/mol.

The molecular weight distribution (PDI) of the multiblock copolymer may be 1.5 to 3.0, particularly, 1.55 or more, 1.6 or more, 1.65 or more, and 2.8 or less, 2.6 or less, 2.5 or less, 2.3 or less, 2.0 or less, more particularly, 1.65 to 2.0.

The molecular weight distribution is calculated from the ratio of (weight average molecular weight)/(number average molecular weight), and the weight average molecular weight and the number average molecular weight are polystyrene converted molecular weights analyzed by gel permeation chromatography (GPC) .

The multiblock copolymer of the present invention is a polyolefin-polystyrene-based multiblock copolymer including a polystyrene-based block including a repeating unit derived from an aromatic vinyl-based monomer and a polyolefin-based block including a repeating unit derived from ethylene and a repeating unit derived from an alpha-olefin-based monomer, and the alpha-olefin-based monomer may be alpha-olefin of 5 to 20 carbon atoms, particularly, alpha-olefin of 5 to 14 carbon atoms.

The alpha-olefin-based monomer may be, for example, one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene and 3,4-dimethyl-1-hexene, particularly, 1-hexene.

### Method for preparing multiblock copolymer

The method for preparing the multiblock copolymer of the present invention comprises: (S1) a step of reacting ethylene and an alpha-olefin-based monomer using an organozinc compound as a chain transfer agent in the presence of a catalyst composition comprising a transition metal compound to prepare a polyolefin-based block; and (S2) a step of reacting an aromatic vinyl-based monomer with the polyolefin-based block in the presence of an alkyllithium compound and an amine-based compound to prepare a multiblock copolymer.

### Step (S1)

Step (S1) is a step of reacting ethylene and an alpha-olefin-based monomer using an organozinc compound as a chain transfer agent in the presence of a catalyst composition including a transition metal compound to prepare a polyolefin-basedblock.

According to an embodiment of the present invention, the transition metal catalyst is a catalyst for propagating an olefin-based polymer through coordination chain transfer polymerization, and may be a catalyst composition including a transition metal catalyst that is a main catalyst and a co-catalyst.

In the present invention, the transition metal compound may be a compound represented by Formula 1 below.

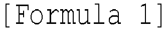

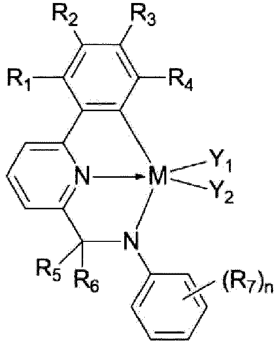

In Formula 1,
M is Ti, Zr or Hf,
R₁ to R₄ are each independently hydrogen; a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where adjacent two or more among them may be connected to form a ring,
R₅ and R₆ are each independently hydrogen; a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where the substitution is conducted with an alkyl group of 1 to 12 carbon atoms,
each R₇ is independently a substituted or unsubstituted alkyl group of 4 to 20 carbon atoms; a substituted or unsubstituted cycloalkyl group of 4 to 20 carbon atoms; or a substituted or unsubstituted aryl group of 6 to 20 carbon atoms,
n is 1 to 5, and
Y₁ and Y₂ are each independently a halogen group; an alkyl group of 1 to 20 carbon atoms; an alkenyl group of 2 to 20 carbon atoms; an alkynyl group of 2 to 20 carbon atoms; a cycloalkyl group of 3 to 20 carbon atoms; an aryl group of 6 to 20 carbon atoms; an alkylaryl group of 7 to 20 carbon atoms; an arylalkyl group of 7 to 20 carbon atoms; a heteroaryl group of 5 to 20 carbon atoms; an alkoxy group of 1 to 20 carbon atoms; a substituted or unsubstituted aryloxy group of 5 to 20 carbon atoms; an alkylamino group of 1 to 20 carbon atoms; an arylamino group of 5 to 20 carbon atoms; an alkylthio group of 1 to 20 carbon atoms; an arylthio group of 5 to 20 carbon atoms; an alkylsilyl group of 1 to 20 carbon atoms; an arylsilyl group of 5 to 20 carbon atoms; a hydroxyl group; an amino group; a thiol group; a silyl group; a cyano group; or a nitro group.

Particularly, in Formula 1, M may be Hf.

In addition, particularly, in Formula 1, R₁ to R₄ may be each independently hydrogen; or a substituted or unsubstituted alkyl group of 1 to 20 carbon atoms, where adjacent two or more among them may be connected to form a ring. Alternatively, R₁ and R₂ may be each independently an alkyl group of 1 to 20 carbon atoms and may be connected with each other to form an aromatic ring of 5 to 20 carbon atoms, and R₃ and R₄ may be hydrogen.

In addition, particularly, in Formula 1, R₅ and R₆ are each independently hydrogen; or a substituted or unsubstituted aryl group of 6 to 20 carbon atoms, where the substitution is with an alkyl group of 1 to 6 carbon atoms.

In addition, particularly, in Formula 1, each R₇ may be independently a substituted or unsubstituted alkyl group of 4 to 20 carbon atoms; a substituted or unsubstituted cycloalkyl group of 4 to 20 carbon atoms; or a substituted or unsubstituted aryl group of 6 to 20 carbon atoms.

Particularly, in Formula 1, n may be 1 to 3, preferably, 2.

Particularly, in Formula 1, Y₁ and Y₂ may be each independently an alkyl group of 1 to 20 carbon atoms.

More particularly, the transition metal compound represented by Formula 1 may be a compound represented by Formula 1a below.

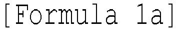

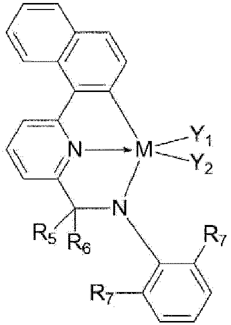

In Formula 1a,
M, R₅ to R₇, Y₁ and Y₂ are the same as defined above.

The transition metal compound represented by Formula 1 may particularly be selected from the compounds below, but is not limited thereto, and all transition metal compounds corresponding to Formula 1 are included in the present invention.

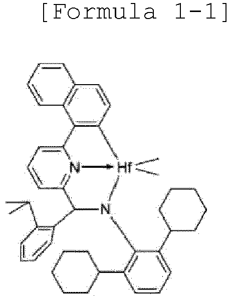

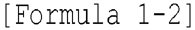

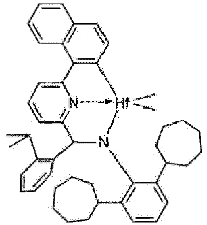

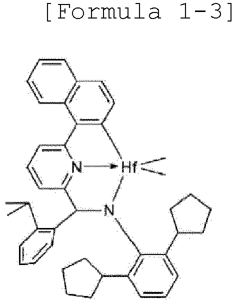

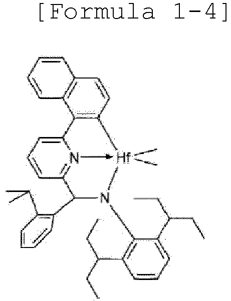

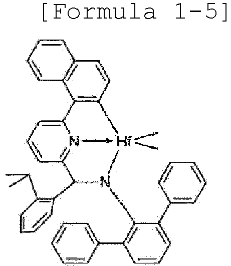

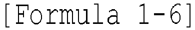

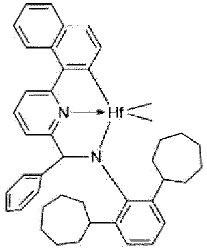

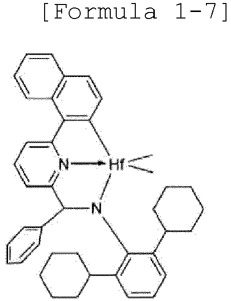

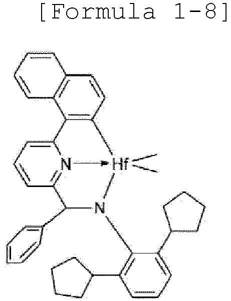

In addition, the present invention provides a ligand compound represented by Formula 2 below.

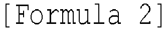

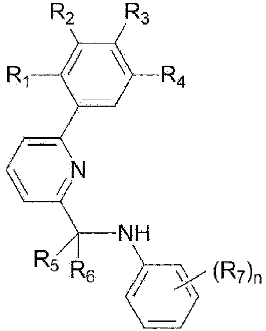

In Formula 2,
R₁ to R₄ are each independently a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where adjacent two or more among them may be connected with each other to form a ring,
R₅ and R₆ are each independently hydrogen; a substituted or unsubstituted alkyl group of 1 to 20 carbon atoms; a substituted or unsubstituted cycloalkyl group of 3 to 20 carbon atoms; or a substituted or unsubstituted aryl group of 6 to 20 carbon atoms, where the substitution is with an alkyl group of 1 to 12 carbon atoms,
each R₇ is independently a substituted or unsubstituted alkyl group of 4 to 20 carbon atoms; a substituted or unsubstituted cycloalkyl group of 4 to 20 carbon atoms; or a substituted or unsubstituted aryl group of 6 to 20 carbon atoms, and
n is 1 to 5.

That is, the transition metal compound of the present invention may be prepared by including a step of reacting a ligand compound represented by Formula 2 below and a compound represented by Formula 3.

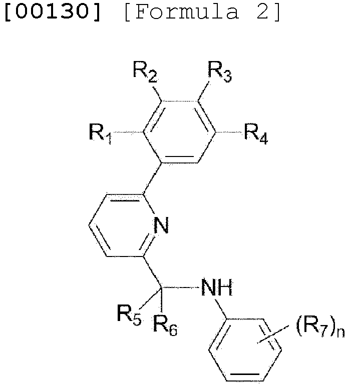

[Formula 3] M(Y₁Y₂)₂

In the above formulae,
R₁ to R₇, M, Y₁ and Y₂ are the same as defined above.

Meanwhile, during preparing the transition metal compound represented by Formula 1 of the present invention, reactions may be performed by a process below.

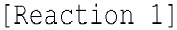

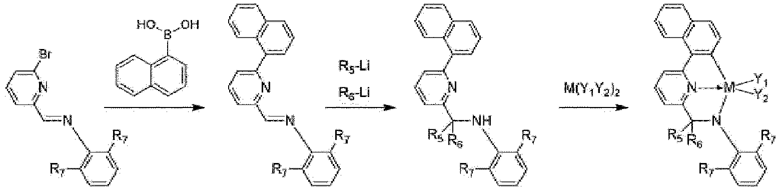

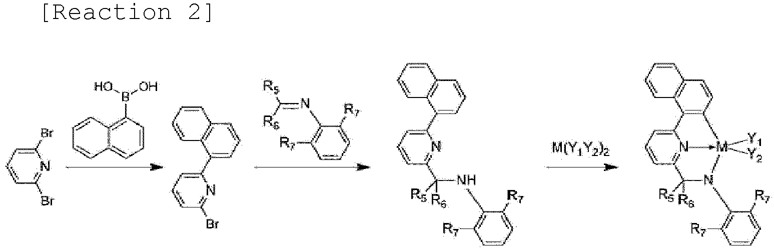

In the present invention, the organozinc compound is used as a chain transfer agent and is a material inducing the preparation of a copolymer by performing chain transfer during the preparation in polymerization reaction, and the chain transfer agent may be a chain transfer agent for preparing a block copolymer by coordination chain transfer polymerization.

In an embodiment of the present invention, the chain transfer agent may include an organozinc compound represented by Formula 5 below, and particularly, the chain transfer agent may include the organozinc compound represented by Formula 5 below in 96 mol% or more, preferably, may not include by-products other than the organozinc compound represented by Formula 5.

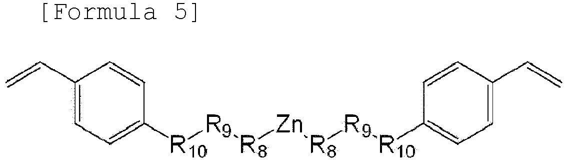

In Formula 5,
R₈ and R₁₀ are each independently a single bond or an alkylene group of 1 to 10 carbon atoms, R₉ is an alkylene group of 1 to 10 carbon atoms or -SiR₁₁R₁₂-, and R₁₁ and R₁₂ are each independently an alkyl group of 1 to 10 carbon atoms.

In addition, according to an embodiment of the present invention, in Formula 5, R₈ and R₁₀ may be each independently a single bond or an alkylene group of 1 carbon atom, R₉ may be an alkylene group of 1 carbon atom or -SiR₁₁R₁₂-, and R₁₁ and R₁₂ may be each independently an alkyl group of 1 carbon atom.

According to an embodiment of the present invention, the organozinc compound represented by Formula 5 may be one selected from the group consisting of organozinc compounds represented by Formula 5-1 to Formula 5-4, preferably, any one among Formula 5-3 and Formula 5-4 below.

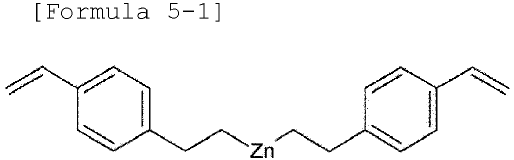

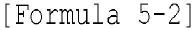

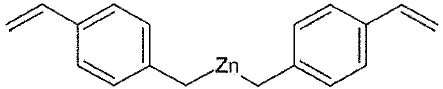

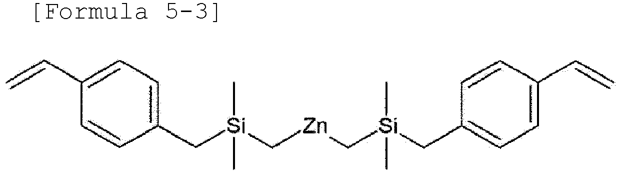

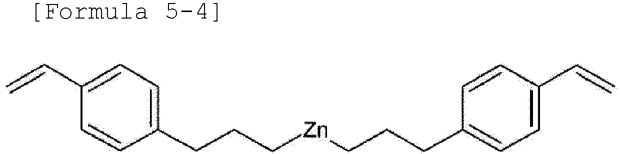

According to an embodiment of the present invention, the chain transfer agent may preferably include the organozinc compound of Formula 5 in 97 mol% or more, preferably, 98 mol% or more, or 99 mol% or more. Most preferably, by-products other than the organozinc compound may be not included. This means that impurities including chlorine or magnesium are not included either as well as the by-products such as a dimer other than the organozinc compound represented by Formula 5. That is, the chain transfer agent may include only the organozinc compound represented by Formula 5.

If ethylene and an alpha-olefin-based monomer are reacted using the organozinc compound of Formula 5 as a chain transfer agent in the presence of a catalyst composition including a transition metal compound, polymerization may be performed with the insertion of the ethylene and the alpha-olefin-based monomer between zinc (Zn) and R₁₀ of the organozinc compound. In an embodiment of the method of preparing a multiblock copolymer of the present invention, if the compound of Formula 5 is used as the organozinc compound for the reaction of ethylene and an alpha-olefin-based monomer to prepare a polyolefin-based block, an olefin-based polymer block intermediate may be prepared, and an example of the olefin-based polymer block intermediate may be represented by Formula 6.

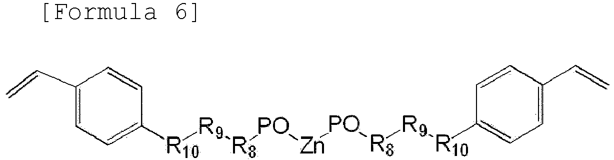

In Formula 6, R₈ and R₁₀ may be each independently a single bond or an alkylene group of 1 to 10 carbon atoms, R₉ may be an alkylene group of 1 to 10 carbon atoms or -SiR₁₁R₁₂-, R₁₁ and R₁₂ are each independently an alkyl group of 1 to 10 carbon atoms, and PO may be an olefin-based polymer block.

According to an embodiment of the present invention, the organozinc compound may be prepared by a preparation method including: a step of preparing a Grignard reagent containing a styrene residual group; and a step of reacting the Grignard reagent thus prepared with a zinc compound to prepare the organozinc compound represented by Formula 5, and the zinc compound may be alkyl zinc alkoxide.

According to an embodiment of the present invention, the organozinc compound prepared by the preparation method of the organozinc compound and represented by Formula 5 is synthesized into a single compound, does not include by-products such as a dimer, and further, does not include impurities including chlorine, for example organozinc chloride (R-Zn-Cl) that may act as a catalyst poison. In addition, if the organozinc compound represented by Formula 5 is prepared according to the preparation method of the organozinc compound, a single compound is synthesized, and effects of excellent synthesis reproduction may be achieved. Meanwhile, in preparing the organozinc compound, as in the present invention, in order to exclude by-products and impurities, it may be important to select the Grignard reagent containing a styrene residual group and the zinc compound.

According to an embodiment of the present invention, the Grignard reagent containing a styrene residual group may be represented by Formula 7 below.

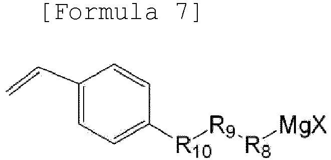

In Formula 7, R₈ and R₁₀ may be each independently a single bond or an alkylene group of 1 to 10 carbon atoms, R₉ may be an alkylene group of 1 to 10 carbon atoms or -SiR₁₁R₁₂-, R₁₁ and R₁₂ may be each independently an alkyl group of 1 to 10 carbon atoms, and X may be a halogen group.

In addition, according to an embodiment of the present invention, in Formula 7, R₈ and R₁₀ may be each independently a single bond or an alkylene group of 1 carbon atom, R₉ may be an alkylene group of 1 carbon atom or -SiR₁₁R₁₂-, and R₁₁ and R₁₂ may be each independently an alkyl group of 1 carbon atom.

According to an embodiment of the present invention, the Grignard reagent containing a styrene residual group, represented by Formula 7 may be one selected from the group consisting of Grignard reagents containing a styrene residual group, represented by Formulas 7-1 to 7-4 below.

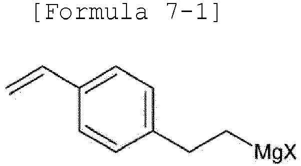

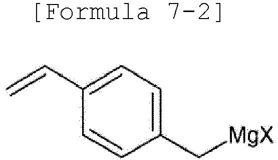

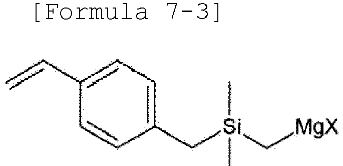

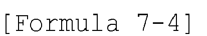

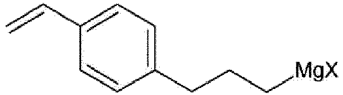

According to an embodiment of the present invention, the Grignard reagent containing a styrene residual group, represented by Formula 7 may be prepared through the reaction of a halide (-X) substituted with R₈ and magnesium, particularly, a magnesium powder or a magnesium metal.

According to an embodiment of the present invention, the Grignard reagent containing a styrene residual group, represented by Formula 7 may be prepared through the reaction of a compound represented by Formula 8 below and magnesium, particularly, a magnesium powder or a magnesium metal.

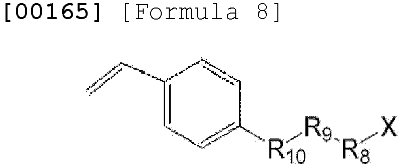

In Formula 8, R₈ and R₁₀ may be each independently a single bond or an alkylene group of 1 to 10 carbon atoms, R₉ may be an alkylene group of 1 to 10 carbon atoms or -SiR₁₁R₁₂-, R₁₁ and R₁₂ may be each independently an alkyl group of 1 to 10 carbon atoms, and X may be a halogen group.

According to an embodiment of the present invention, in Formula 8, R₈ and R₁₀ may be each independently a single bond or an alkylene group of 1 to 3 carbon atoms, R₉ may be an alkylene group of 1 to 3 carbon atoms or -SiR₁₁R₁₂-, R₁₁ and R₁₂ may be each independently an alkyl group of 1 to 3 carbon atoms, and X may be a halogen group.

In addition, according to an embodiment of the present invention, in Formula 8, R₈ and R₁₀ may be each independently a single bond or an alkylene group of 1 carbon atom, R₉ may be an alkylene group of 1 carbon atom or -SiR₁₁R₁₂-, R₁₁ and R₁₂ may be each independently an alkyl group of 1 carbon atom, and X may be a halogen group selected from the group consisting of Cl, Br and I.

According to an embodiment of the present invention, the compound represented by Formula 8 may be one selected from the group consisting of the compounds represented by Formulas 8-1 to 8-4 below.

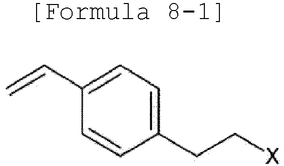

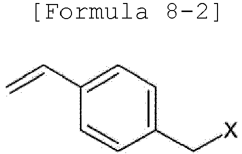

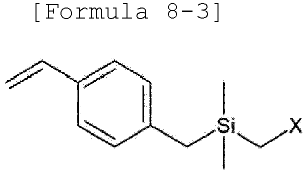

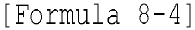

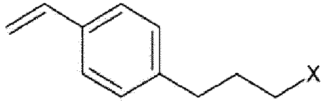

According to an embodiment of the present invention, when preparing the Grignard reagent containing a styrene residual group, represented by Formula 7, the reaction of the compound represented by Formula 8 with the magnesium powder or magnesium metal may be performed with an excessive molar ratio, i.e., a molar ratio greater than 1 mol of the magnesium powder or magnesium metal in contrast to 1 mol of the compound represented by Formula 8 may be used, and in this case, 50 mol% or more, 60 mol% or more, 70 mol% or more, 80 mol% or more, 90 mol% or more, 95 mol% or more, or 99 mol% or more of the compound represented by Formula 8 may be converted to a Grignard reagent containing a styrene residual group, represented by Formula 7.

According to an embodiment of the present invention, the reaction of the compound represented by Formula 8 and the magnesium powder or magnesium metal may be performed in a molar ratio of greater than 1:1 to 1:10, greater than 1:1 to 1:5, greater than 1:1 to 1:2, or 1:1.01 to 1:1.60 based on a molar ratio, and within this range, the conversion ratio to the Grignard reagent containing a styrene residual group, represented by Formula 7 may be high, the remaining magnesium content after the reaction may be minimized, and the removal of remaining magnesium powder or magnesium metal may be easy.

According to an embodiment of the present invention, in preparing an organozinc compound, the zinc compound is required to be a zinc compound that may induce substitution with the same two organic groups at zinc based on the zinc. Accordingly, zinc chloride (ZnCl₂) may be easily considered, but if zinc chloride is used as the zinc compound, there are problems of remaining impurities including chlorine (for example, alkyl zinc chloride), that may act as a catalyst poison. Accordingly, in the present invention, alkyl zinc alkoxide is used as the zinc compound.

According to an embodiment of the present invention, the alkyl group of the alkyl zinc alkoxide may be an alkyl group of 1 to 10 carbon atoms, an alkyl group of 1 to 5 carbon atoms, an alkyl group of 1 to 3 carbon atoms, or an ethyl group, and the alkoxide group may be an alkoxide group of 1 to 10 carbon atoms, an alkoxide group of 1 to 5 carbon atoms, an alkoxide group of 1 to 3 carbon atoms, or a methoxide group. In a particular embodiment, the zinc compound may be ethyl zinc methoxide.

According to an embodiment of the present invention, the alkyl zinc alkoxide may be prepared from dialkyl zinc. In a particular embodiment, the alkyl zinc alkoxide may be prepared by reacting dialkyl zinc and an alcohol in situ. In this case, the alkyl group of the dialkyl zinc may be the same as the above-described alkyl group of the alkyl zinc alkoxide, and the alcohol may be an alcohol in which hydrogen is bonded to the alkoxide group of the alkyl zinc alkoxide.

According to an embodiment of the present invention, if the alkyl zinc alkoxide is used as the zinc compound, halogenated magnesium alkoxide is produced during the reaction of the Grignard reagent and the zinc compound, and since this is an insoluble salt, filtering is easy, thereby preventing the remaining of impurities.

According to an embodiment of the present invention, the reaction of the Grignard reagent and the zinc compound may be performed in a molar ratio of 10:1 to 1:10, 5:1 to 1:5, 3:1 to 1:3, 2:1 to 1:2, 1.5:1 to 1:1.5, or 1:1 based on a molar ratio, and within this range, a single compound may be synthesized, by-products such as a dimer may be excluded, impurities containing chlorine that may act as a catalyst poison may be excluded, and the removal of impurities including magnesium that may act as a catalyst poison may be easy.

According to an embodiment of the present invention, all steps and all reactions of the preparation method of the zinc compound may be performed in an organic solvent, and the reaction temperature and the reaction pressure may be controlled according to the purpose of increasing yield and purity.

In the preparation method of the zinc compound according to an embodiment of the present invention, the catalyst poison may be completely removed by replacing the conventional borane-based compound containing a styrene residual group with the Grignard reagent containing a styrene residual group, and by replacing alkyl zinc or zinc chloride with alkyl zinc alkoxide.

In addition, through the improvement of the method, different from the conventional method obtaining a mixture of a dimer, a trimer and a zinc compound of which terminal is saturated as a product, a compound in a monomer type of which terminal vinyl is completely conserved could be obtained as a single compound. Accordingly, the storage stability of the zinc compound may be improved, the physical properties of a final copolymer may be improved, and the production amount of a diblock not a triblock copolymer could be markedly reduced.

In addition, the catalyst composition may further include a compound represented by Formula 9 below, and the compound represented by Formula 8 may play the roles of both a co-catalyst and a scavenger.

[Formula 9] -[Al(Rₐ)-O]ₘ-

In Formula 9,
each Rₐ is independently a halogen radical; a hydrocarbyl radical of 1 to 20 carbon atoms; or a halogen-substituted hydrocarbyl radical of 1 to 20 carbon atoms, and
m is an integer of 2 or more.

The compound represented by Formula 9 is not specifically limited as long as it is alkylaluminoxane. Preferred examples may be modified methylaluminoxane (MMAO), methylaluminoxane (MAO), ethylaluminoxane, isobutylaluminoxane, butylaluminoxane, etc., and particularly preferable compound may be modified methylaluminoxane (MMAO).

The compound represented by Formula 9 is a compound of an oligomer type produced by the reaction of alkylaluminum with water, and if used as a cocatalyst, chain transfer may be reduced. Accordingly, a copolymer having a high molecular weight may be prepared, and the production of homo-polyolefin by side reactions may be prevented. Accordingly, finally, a polyolefin-polystyrene-based multiblock copolymer showing excellent physical properties such as high tensile strength may be prepared.

Meanwhile, the compound represented by Formula 9 may suppress chain transfer as described above, on the contrary, for example, if a compound like alkylaluminum is used as a co-catalyst, chain transfer occurs a lot, the molecular weight of a copolymer may be reduced, the production of a homo-polyolefin may increase, and problems of degrading the physical properties of a block copolymer may be generated.

Like this, by using the transition metal compound represented by Formula 1 and the compound represented by Formula 5 in combination in the present invention, the multiblock copolymer satisfying the above-described conditions may be prepared.

In addition, the transition metal compound represented by Formula 1 and the compound represented by Formula 9 may be used in a supported type by a support. As the support, silica or alumina may be used, without limitation.

In addition, the catalyst composition may further include a compound represented by Formula 10 below.

[Formula 10] [L-H]+[Z(A)₄]⁻ or [L]⁺[Z(A)₄]⁻

In Formula 10,
Z is an element in group 13,
each A is independently aryl of 6 to 20 carbon atoms where one or more hydrogen atoms may be substituted with substituents; or alkyl of 1 to 20 carbon atoms, and
the substituent of A is halogen; hydrocarbyl of 1 to 20 carbon atoms; alkoxy of 1 to 20 carbon atoms; or aryloxy of 6 to 20 carbon atoms.

For example, step (S1) may be performed in a homogenous solution state. In this case, a hydrocarbon solvent may be used as a solvent, or the olefin monomer itself may be used as a medium. The hydrocarbon solvent may include an aliphatic hydrocarbon solvent of 4 to 20 carbon atoms, particularly, isobutane, hexane, cyclohexane, methylcyclohexane, or the like. The solvent may be used alone, or mixtures of two or more thereof may be used.

The polymerization temperature of step (S1) may change according to the reaction material, reaction conditions, or the like, and may particularly be 70 to 170°C, particularly, 80 to 150°C, or 90 to 120°C. Within the aforementioned range, the solubility of a polymer may increase, and the catalyst may be thermally stabilized.

The polymerization in step (S1) may be performed by a batch type, a semi-continuous type or a continuous type, or may be performed by two or more steps having different reaction conditions.

The compound prepared by the above-described step (S1) may play the role of a precursor for preparing the polyolefin-polystyrene-based multiblock copolymer of the present invention by anionic polymerization reaction of step (S2), which will be explained later.

In an embodiment of the present invention, the alpha-olefin-based monomer may be an alpha-olefin of 5 to 20 carbon atoms, particularly, alpha-olefin of 5 to 14 carbon atoms.

In an embodiment of the present invention, as an example of the alpha-olefin, one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene and 3,4-dimethyl-1-hexene, may be included, more particularly, 1-hexene.

### Step (S2)

Step (S2) is a step of reacting an aromatic vinyl-based monomer with the polyolefin-based block to prepare a multiblock copolymer.

In step (S2), an aromatic vinyl-based monomers may be continuously inserted between the zinc-carbon bonds of (polyolefinyl)₂Zn included in the compound formed by step (S1) to form a polystyrene-based chain, and at the same time, styrene groups derived from a chain extender present at the terminal of the compound formed by step (S1) may participate as a copolymer moiety with the aromatic vinyl-based monomer to be connected with a polystyrene chain. In addition, the multiblock copolymer produced through the process may be easily quenched through the reaction of terminal group with water, oxygen or an organic acid, and through this, conversion into a polyolefin-polystyrene-based multiblock copolymer which is industrially useful may be achieved.

The aromatic vinyl-based monomer may be an aromatic vinyl-based monomer of 6 to 20 carbon atoms. For example, an aromatic vinyl-based monomer including an ethylene substituted with an aryl group of 6 to 20 carbon atoms, an ethylene substituted with a phenyl group, or the like, for example, styrene, α-methylstyrene, vinyltoluene, alkyl styrene substituted with C₁₋₃ alkyl (for example, o-methylstyrene, m-methylstyrene, p-methylstyrene, p-ethylstyrene, or the like) or halogen-substituted styrene, more particularly, styrene may be used.

In an embodiment of the present invention, the anionic polymerization initiator may be an alkyllithium compound represented by Formula 11 below.

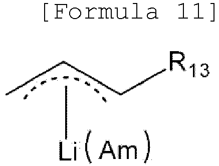

In Formula 11,
R₁₃ is hydrogen or a hydrocarbon group of 1 to 20 carbon atoms,
Am is an amine-based compound represented by Formula 12 below,

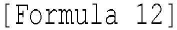

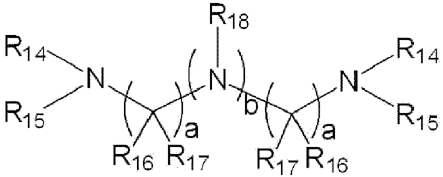

In Formula 12,
R₁₄ to R₁₈ are each independently hydrogen or a hydrocarbon group of 1 to 20 carbon atoms, and
a and b are each independently an integer of 0 to 3, where a and b are not 0 at the same time.

In an embodiment of the present invention, R₁₃ may be hydrogen, alkyl of 1 to 20 carbon atoms, cycloalkyl of 3 to 20 carbon atoms, or a substituted or unsubstituted arylalkyl of 7 to 20 carbon atoms;
R₁₄ to R₁₈ may be each independently hydrogen, alkyl of 1 to 20 carbon atoms, alkenyl of 1 to 20 carbon atoms, cycloalkyl of 3 to 20 carbon atoms, a substituted or unsubstituted aryl of 6 to 20 carbon atoms, or a substituted or unsubstituted arylalkyl of 7 to 20 carbon atoms; and
a and b may be each independently an integer of 0 to 2.

In addition, in an embodiment of the present invention, R₁₃ to R₁₈ may be each independently hydrogen or alkyl of 1 to 20 carbon atoms; a is 1 or 2, and b may be 0 or 1.

Particularly, a is an integer of 1 to 3, b may be an integer of 0 to 3, more particularly, a is 1 or 2, b may be an integer of 0 to 2, more particularly, a is 1 or 2, and b may be 0 or 1.

In an embodiment of the present invention, Am in Formula 11 may be represented by Formula 13 or 14 below.

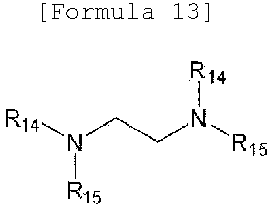

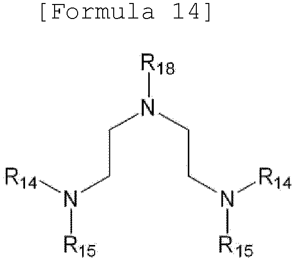

In the formulas,
R₁₄, R₁₅ and R₁₈ are each independently hydrogen or alkyl of 1 to 20 carbon atoms.

In addition, in an embodiment of the present invention, Am in Formula 11 may particularly be represented by Formula 13a or Formula 14a below.

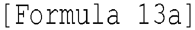

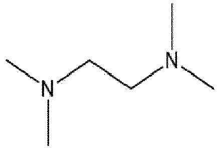

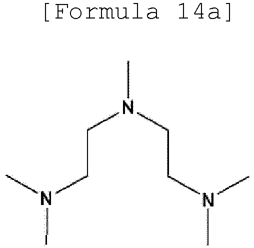

In the preparation method of the multiblock copolymer of the present invention, the compound represented by Formula 11 is used as an anionic polymerization initiator, and a polystyrene-based chain may be propagated from the organozinc compound prepared in step S1, particularly, the polyolefin of (polyolefinyl)₂Zn in which a polyolefin-based chain is propagated with zinc (Zn) as a center.

The anionic polymerization initiator may be prepared by a preparation method below.

The preparation method of the anionic polymerization initiator includes a process of injecting and reacting a compound represented by Formula 16 and a compound represented by Formula 12 in the presence of a compound represented by Formula 15.

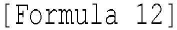

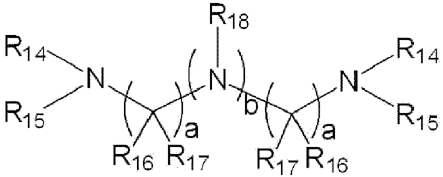

[Formula 15] B - Li

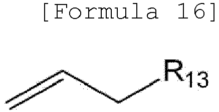

In the formulas,
R₁₃ to R₁₈ are each independently hydrogen or a hydrocarbon group of 1 to 20 carbon atoms;
a and b are each independently an integer of 0 to 3, where a and b are not 0 at the same time; and
B is alkyl of 1 to 20 carbon atoms.

In an embodiment of the present invention, R₁₃ may be hydrogen or a hydrocarbon group of 1 to 20 carbon atoms; R₁₄ to R₁₈ may be each independently hydrogen, alkyl of 1 to 20 carbon atoms, alkenyl of 1 to 20 carbon atoms, cycloalkyl of 3 to 20 carbon atoms, substituted or unsubstituted aryl of 6 to 20 carbon atoms, or substituted or unsubstituted arylalkyl of 7 to 20 carbon atoms; a and b may be each independently an integer of 0 to 2; and B may be alkyl of 1 to 12 carbon atoms.

In addition, in an embodiment of the present invention, R₁₄ to R₁₈ are each independently hydrogen or alkyl of 1 to 20 carbon atoms; a is an integer of 1 or 2, and b may be an integer of 0 or 1; and B may be alkyl of 1 to 8 carbon atoms.

Particularly, a is an integer of 1 to 3, b may be an integer of 0 to 3, more particularly, a is 1 or 2, and b may be an integer of 0 to 2, more particularly, a is 1 or 2, and b may be 0 or 1.

The alkyllithium compound represented by Formula 16 may be, for example, n-BuLi, and n-BuLi is a material widely used as an initiator of anionic polymerization, is easy to get, and has excellent unit price efficiency.

In the preparation method of the anionic polymerization initiator, a process of reacting the compound represented by Formula 15 with the compound represented by Formula 16 may be performed firstly, and then, by reacting with the compound of Formula 12, the compound represented by Formula 11 may be prepared. Particularly, by reacting the compound represented by Formula 15 with the compound represented by Formula 16, allyllithium may be formed as an intermediate, and the allyllithium may react with the compound of Formula 12 to finally form the anionic polymerization initiator of Formula 11.

In addition, the process of injecting and reacting the compound represented by Formula 16 and the compound represented by Formula 12 in the presence of the compound represented by Formula 15, may be performed in conditions without an additional solvent. The conditions without an additional solvent mean the absence of a separate compound that may be a solvent, other than the compound represented by Formula 15 and the compound represented by Formula 12, or the presence of a small amount that does not arise significant reaction with the compound of Formula 15 in the presence of the compound represented by Formula 16.

If the reaction is performed in conditions without an additional solvent, the reaction of the compound represented by Formula 15 with the compound represented by Formula 16 may be performed as the main reaction, and the anionic polymerization initiator of Formula 11 may be effectively prepared. If a separate solvent is present, the anionic polymerization initiator of Formula 11, a compound produced by the reaction of the compound represented by Formula 15 and the compound represented by Formula 12, and a decomposed compound of the compound produced by the reaction of the compound represented by Formula 15 and the compound represented by Formula 12, may be present as a mixture, ineffectively.

### Thermoplastic resin composition

The thermoplastic resin composition according to the present invention includes polypropylene and the multiblock copolymer according to an embodiment of the present invention, and the thermoplastic resin composition according to the present invention is a resin composition including polypropylene and the multiblock copolymer. The multiblock copolymer includes a polystyrene-based block including a repeating unit derived from an aromatic vinyl-based monomer and a polyolefin-based block including a repeating unit derived from ethylene and a repeating unit derived from an alpha-olefin-based monomer and is characterized in having a liquid-like ordering phase and a lamellar phase, the liquid-like ordering phase has a domain size (R) of 15.0 nm to 22.0 nm and a distance between domains (D1) of 40.0 nm to 60.0 nm, and the lamellar phase has a domain size (T) of 2.0 nm to 9.0 nm and a distance between domains (D2) of 10 nm to 50 nm. The domain size and the distance between domains are measured by small angle X-ray scattering.

Such a thermoplastic resin composition according to the present invention may satisfy the conditions a) to c) below.
a) a height of a stress change (Tan delta, tan δ) peak in accordance with temperature, derived by dynamic viscoelasticity analysis is 0.02 to 0.13;
b) a radius (Rv) of a dispersion phase is 0.10 um to 0.50 um; and
c) a glass transition temperature (Tg) is -60°C to-30°C.

The height of the stress change peak in accordance with temperature and the glass transition temperature of the thermoplastic resin composition may be confirmed through the measurement of dynamic mechanical analyzer (DMA), and the dispersibility of the block copolymer in a polypropylene matrix in the resin composition may be figured out through scanning electron microscope (SEM) analysis. The dispersion properties and dynamic properties (rheological properties) of the thermoplastic resin composition may be indexes for judging the compatibility between the polypropylene matrix and the block copolymer.

The thermoplastic resin composition according to the present invention satisfies the ranges of the height of a stress change (Tan delta, tan δ) peak in accordance with temperature, derived from the dynamic viscoelasticity analysis, the radius of a dispersion phase, and the glass transition temperature, and has excellent compatibility between the polypropylene and the multiblock copolymer included therein to show excellent impact resistance.
a) The height of a stress change (Tan delta, tan δ) peak in accordance with temperature, derived by dynamic viscoelasticity analysis is 0.02 to 0.13, particularly, 0.03 or more, 0.04 or more, and 0.13 or less, 0.12 or less, 0.11 or less, more particularly, 0.05 to 0.11.

The height of a stress change (Tan delta, tan δ) peak in accordance with temperature is an index showing properties related to the viscoelasticity of a polymer, and is a value obtained by dividing a loss modulus value by a storage modulus value. With the increase of the loss modulus value, and with the decrease of the storage modulus value, the height value of a stress change (Tan delta, tan δ) peak may increase. A large tan δ value means that, if an impact is applied to a polymer, the degree of dissipating energy transferred from the impact is high. In addition, the larger the tan δ value, the better the effects as an impact reinforcing agent.

The thermoplastic resin composition according to the present invention satisfies the range of the tan δ and when compared to a thermoplastic resin composition including common polypropylene and multiblock copolymer, if the same level of the multiblock copolymer is included, a relatively higher tan δ value is shown and excellent impact dissipation effects may be shown.

b) The radius (Rv) of a dispersion phase is 0.10 um to 0.50 um, particularly, 0.10 um or more, 0.12 um or more, 0.15 um or more, 0.18 um or more, 0.19 um or more, 0.20 um or more, and 0.45 um or less, 0.40 um or less, 0.35 um or less, 0.30 um or less, 0.29 um or less, 0.28 um or less, 0.27 um or less, more particularly, 0.10 um to 0.27 um, 0.21 um to 0.27 um.

If the radius (Rv) of a dispersion phase decreases, excellent dispersibility may be shown, and the thermoplastic resin composition according to the present invention satisfies the range of the radius (Rv) of a dispersion phase and shows excellent dispersibility.

c) The glass transition temperature (Tg) is -60°C to -30°C, and may particularly be -58°C or more, -57°C or more, -56°C or more, -55°C or more, and -35°C or less, -40°C or less, -45°C or less, -46°C or less, -47°C or less, -48°C or less, - 49°C or less, more particularly, -55°C to -49°C.

The multiblock copolymer included in the thermoplastic resin composition of the present invention is the same as explained in the above-described multiblock copolymer.

In the thermoplastic resin composition according to an embodiment of the present invention, the polypropylene may particularly be a homopolymer of polypropylene, or a copolymer of propylene and an alpha-olefin monomer, and in this case, the copolymer may be an alternating, random, or block copolymer.

The alpha-olefin-based monomer may particularly be an aliphatic olefin of 2 to 12 carbon atoms, or 2 to 8 carbon atoms. More particularly, ethylene, propylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, 3,4-dimethyl-1-hexene, or the like may be used, and any one among them or mixtures of two or more thereof may be used.

More particularly, the polypropylene may be any one selected from the group consisting of a polypropylene copolymer, a propylene-alpha-olefin copolymer, and a propylene-ethylene-alpha-olefin copolymer, or mixtures of two or more thereof, and in this case, the copolymer may be a random or block copolymer.

In addition, the melt index (MI) measured at 230°C and a load of 2.16 kg of the polypropylene may be 0.5 g/10 min to 100 g/10 min, and particularly, the melt index (MI) may be 1 g/10 min to 90 g/10 min. If the melt index of the polypropylene is deviated from the range, it is apprehended that defects may arise during injection molding of the thermoplastic resin composition.

Particularly, in the thermoplastic resin composition according to an embodiment of the present invention, the polypropylene may be a copolymer, more particularly, a propylene-ethylene copolymer, or highly crystalline polypropylene (HCPP) having a melt index (MI) measured at 230°C and a load of 2.16 kg of 0.5 g/10 min to 100 g/10 min, particularly, 1 g/10 min to 90 g/10 min, more particularly, 2 g/10 min to 50 g/10 min. If the copolymer having such physical properties, is included as polypropylene in the above-described amount range, strength properties, particularly, strength properties at room temperature may be improved.

The copolymer may be prepared by using a general preparation reaction of a polymer so as to satisfy the above-described physical property conditions, or may be obtained commercially and used. Particular examples may include SEETE^{™} M1600 of LG Chem, Co., CB5230 of Korea Petrochemical Co. or the like.

In addition, in the thermoplastic resin composition according to an embodiment of the present invention, the polypropylene may particularly be one or more random propylene copolymers, having a DSC melting temperature in a range of 120°C to 160°C, and a melting flow rate (MFR) measured at 230°C and a load of 2.16 kg according to ASTM-D 1238 in a range of 5 g/10 min to 120 g/10 min, and the random propylene copolymer may be included in 20 wt% to 90 wt%, particularly, 30 wt% to 70 wt%, more particularly, 40 wt% to 60 wt% with respect to the total weight of a polypropylene-based composite material. If the polypropylene having such physical properties is included in the above-described amount range, the mechanical strength of the thermoplastic resin composition including hardness, may be improved. The random propylene copolymer may be prepared so as to satisfy the above-described physical property conditions by using the common preparation reaction of a polymer, or may be obtained commercially and used. Particular examples may include Braskem^{™} PP R7021-50RNA of Braskem America Inc., Formolene^{™} 7320A of Formosa Plastics Corporation in America, or the like.

Meanwhile, the thermoplastic resin composition according to an embodiment of the present invention may selectively further include an inorganic filler together with the polypropylene and the multiblock copolymer to improve the mechanical properties of the thermoplastic resin composition.

The inorganic filler may particularly be a powder-type filler, a flake-type filler, a fiber-type filler, or a balloon-type filler, and any one among them or a mixture of two or more thereof may be used. Particularly, the powder-type filler may include: natural silicic acid or silicate such as fine powder talc, kaolinite, plastic clay, and sericite; carbonate such as settleable calcium carbonate, heavy calcium carbonate and magnesium carbonate; hydroxide such as aluminum hydroxide and magnesium hydroxide; oxide such as zinc oxide, magnesium oxide and titanium oxide; synthetic silicic acid or silicate such as hydrated calcium silicate, hydrated aluminum silicate, hydrated silicic acid and anhydrous silicic acid; silicon carbide, or the like. In addition, as the flake-type filler, mica, etc. may be included. In addition, as the fiber-type filler, basic magnesium sulfate whisker, calcium titanate whisker, aluminum borate whisker, sepiolite, processed mineral fiber (PMF), potassium titanate, etc. may be included. As the balloon-type filler, glass balloon, etc. may be included. Among them, talc may be used.

In addition, the inorganic filler may be surface treated to improve the strength properties and molding processability of the thermoplastic resin composition.

Particularly, the inorganic filler may be physically or chemically surface treated using a surface treating agent such as a silane coupling agent, a higher fatty acid, a fatty acid metal salt, an unsaturated organic acid, an organic titanate, a resin acid and polyethylene glycol.

In addition, the inorganic filler may have an average particle diameter (D₅₀) of 1 um to 20 um, particularly, 3 um to 15 um, more particularly, 5 um to 10 um. If the average particle diameter of the inorganic filler is too small, when mixing with the polypropylene and the multiblock copolymer, uniform dispersion is difficult due to the agglomeration of inorganic filler particles, and as a result, the improving effects of the mechanical properties of the resin composition may become insignificant. In addition, if the average particle diameter of the inorganic filler is too large, it is apprehended that the physical properties may be deteriorated due to the deterioration of the dispersibility of the inorganic filler itself.

In the present invention, the average particle diameter (D₅₀) of the inorganic filler may be defined as a particle diameter based on 50% of particle diameter distribution. In the present invention, the average particle diameter (D₅₀) of the inorganic filler may be measured by, for example, observing electron microscope using scanning electron microscopy (SEM), field emission scanning electron microscopy (FE-SEM), etc., or by a laser diffraction method. In case of measuring by the laser diffraction method, more particularly, the inorganic filler particles are dispersed in a dispersion medium and introduced into a commercially available laser diffraction particle size measurement apparatus (for example, Microtrac MT 3000), and then, an average particle diameter (D₅₀) based on 50% of particle diameter distribution in the measurement apparatus may be computed.

The inorganic filler may be included in 0.1 parts by weight to 40 parts by weight with respect to 100 parts by weight of the resin composition. If the amount of the inorganic filler in the resin composition is less than 0.1 parts by weight with respect to 100 parts by weight of the resin composition, improving effects according to the inclusion of the inorganic filler is insignificant, and if the amount is greater than 40 parts by weight, the processability of the resin composition may be deteriorated. More particularly, the inorganic filler may be included in 0.1 parts by weight to 20 parts by weight with respect to the total weight of the resin composition.

The thermoplastic resin composition according to an embodiment of the present invention, satisfying the configuration and amount conditions as described above, may be prepared by mixing a multiblock copolymer, polypropylene and selectively an inorganic filler, and then, heating. In this case, the type and amount of the polypropylene are the same as described above.

The mixing process may be performed by a common method. Particularly, the mixing may be performed using a super mixer or a ribbon mixer.

The thermoplastic resin composition according to an embodiment of the present invention may be useful for blow molding, extrusion molding or injection molding in various fields and uses for packages, constructions and household goods such as materials for automobiles, wirings, toys, fiber and medicine. Particularly, since physical properties such as heat resistance and rigidity are excellent as well as excellent tensile properties and impact strength at room temperature and even at a low temperature, the thermoplastic resin composition may be usefully used for the interior and exterior parts of automobiles.

According to another embodiment of the present invention, molded articles and automotive parts manufactured using the thermoplastic resin composition satisfying the physical properties may be provided.

The molded article may particularly include a blow molding molded article, an inflation molded article, a cast molded article, an extrusion laminate molded article, an extrusion molded article, a foam molded article, an injection molded article, a sheet, a film, a fiber, a monofilament, or a non-woven fabric.

In addition, the automotive parts may be interior and exterior materials for automobiles.

### Preparation method of resin composition

The resin composition of the present invention may be prepared by a preparation method including a step of mixing the multiblock copolymer prepared by the preparation method of a multiblock copolymer with polypropylene.

In an embodiment of the preparation method of the resin composition of the present invention, the preparation method of the multiblock copolymer is the same as described above, and the configuration of the resin composition is also the same as described above.

The resin composition according to an embodiment of the present invention, satisfying the configuration and amount conditions as described above, may be prepared by mixing a multiblock copolymer, polypropylene and selectively an inorganic filler, and then, heating. In this case, the type and amount of the polypropylene are the same as described above.

The mixing process may be performed by a common method. Particularly, the mixing may be performed using a super mixer or a ribbon mixer.

In addition, during performing the mixing process, an additive such as an antioxidant, a thermal stabilizer, a ultraviolet stabilizer, and an antistatic agent may be further included as necessary, and a small amount of an adhesive resin or an additive having a polar group may be selectively further used in a suitable amount range to improve coatability.

In addition, the heating process may be performed at a temperature of the melting point of the polypropylene or higher, and 210°C or less. The heating process may be performed using various common blending machines such as a twin-screw extruder, a single-screw extruder, a roll-mill, a kneader and a banbury mixer.

### Examples

Hereinafter, the present invention will be explained in more detail referring to embodiments. However, the embodiments are for illustrating the present invention, and the scope of the present invention is not limited thereto.

### Reagents and experimental conditions

All experiments were performed under an inert atmosphere using a standard glove box and Schlenk technique. Toluene, hexane and tetrahydrofuran (THF) were distilled with benzophenone ketyl and used. Methylcyclohexane (anhydrous grade) used for polymerization reaction was purchased from Tokyo Chemical Industry (TCI), purified with a Na/K alloy, and used. HfCl₄ of sublimation grade was purchased from Streme and used as it was. An ethylene-propylene gas mixture was purified with trioctylaluminum (0.6 M in a mineral spirits) in a bomb reactor (2.0 L).

¹H NMR (600 MHz) and ¹³C NMR (150 MHz) spectrums were recorded using an ECZ 600 apparatus (JOEL).

GPC data were analyzed in 1,2,4-trichlorobenzene at 160°C using a PL-GPC 220 system equipped with a refractive index detector and two columns (Plarian Mixed-B 7.5 × 300 mm Varian [Polymer Lab]).

### (1) Preparation of transition metal compound

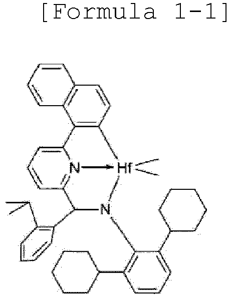

### (i) Preparation of ligand compound

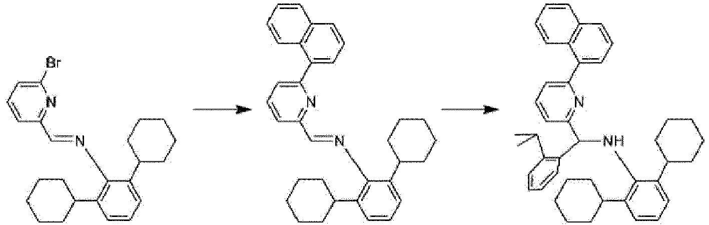

2,6-dicyclohexylaniline (0.772 g, 3.00 mmol) and 6-bromo-2-pyridinecarboxaldehyde (0.558 g, 3.00 mmol) were dissolved in toluene (5 mL), and molecular sieves were injected thereto. The mixture thus obtained was heated to 70°C while stirring overnight. After filtering, the solvent was removed using a rotary evaporator. A yellow solid was obtained (1.07 g, 84%).

¹H NMR(C₆D₆): δ 8.41 (s, 1H, NCH), 8.09 (d, *J* = 7.8 Hz, 1H), 7.53(m, 3H), 6.85(d, *J* = 7.8 Hz, 1H), 6.63(t, *J*= 7.8 Hz, 1H), 2.74(m, 2H), 1.87(d, *J* = 12 Hz, 4H), 1.64(d, *J* = 12.6 Hz, 4H), 1.54(d, *J* = 10.8 Hz, 2H), 1.39(quartet, *J* = 10.2 Hz, 4H), 1.11(m, 6H) ppm.

¹³C NMR(C₆D₆): δ 26.55, 27.33, 34.25, 39.30, 119.42, 124.32, 125.21, 129.83, 136.68, 138.82, 142.54, 148.94, 155.95, 162.06 ppm.

HRMS(EI): *m*/*z* calcd([M⁺] C₂₄H₂₉BrN₂) 424.1514. Found: 424.1516.

Under nitrogen, a schlenk flask was filled with the compound (1.07 g, 2.51 mmol), 1-naphthylboronic acid (0.453 g, 2.64 mmol), Na₂CO₃ (0.700 g, 6.60 mmol), and toluene (5 mL). Deaerated H₂O/EtOH (1 mL, v/v, 1:1) and a solution of (Ph₃P)₄Pd (7.83 mg, 0.00678 mmol) in toluene (1 mL) were injected. By column chromatography on silica gel using hexane and ethyl acetate containing a small amount of triethylamine (*v*/*v,* 90:3:1), a lemon yellow oil was obtained (0.712 g, 60%).

¹H NMR(C₆D₆): δ 8.70 (s, 1H, NCH), 8.41(d, *J* = 7.8 Hz, 1H), 8.31(d, *J*= 7.8 Hz, 1H), 7.68(d, *J*= 7.2 Hz, 1H), 7.65(d, *J* = 7.8 Hz, 1H), 7.54(d, *J*= 7.2 Hz, 1H), 7.27(m, 4H), 7.20(m, 4H), 2.93(m, 2H), 1.90(d, *J*= 12 Hz, 4H), 1.61(d, *J*= 13.2 Hz, 4H), 1.50(d, *J* = 12.6 Hz, 2H), 1.38(m, 4H), 1.11(m, 6H), ppm.

¹³C NMR(C₆D₆): δ 26.63, 27.38, 34.35, 39.36, 119.21, 124.32, 124.98, 125.50, 126.15, 126.21, 126.64, 126.75, 128.15, 128.73, 129.38, 131.81, 134.52, 136.94, 137.14, 138.52, 149.48, 155.13, 159.79, 164.05 ppm.

HRMS (EI): *m*/*z* calcd([M⁺] C₃₄H₃₆N₂) 472.2878. Found: 472.2878.

2-isopropylphenyllithium (0.114 g, 0.904 mmol) dissolved in diethyl ether (8 mL) was added dropwisely to a schlenk flask containing the compound (0.247 g, 0.523 mmol) in diethyl ether (20 mL). After stirring for 3 hours, an aqueous solution (10 mL) of ammonium chloride (0.30 g) was added, and the product was extracted with diethyl ether (3 × 10 mL). The oil thus produced was dried at 60°C overnight under high vacuum. A yellow solid was obtained (0.257 g, 83%).

¹H NMR (C₆D₆): δ 8.24 (m, 1H), 7.90 (m, 1H), 7.64(m, 1H), 7.62(d, *J*= 7.8 Hz, 1H), 7.56(d, *J*= 7.2 Hz, 1H), 7.26(m, 3H), 7.22(m, 4H), 7.11(m, 5H), 5.62(d, *J* = 5.4 Hz, 1H, NCH), 4.59(d, *J* = 5.4 Hz, 1H, NH), 3.31(septet, *J* = 7.2 Hz, 1H,CH), 2.74(m, 2H), 1.79(d, J= 7.8 Hz, 2H), 1.64(m, 4H), 1.54(m, 4H), 1.32(m, 4H), 1.08(m, 2H), 1.03(d, *J* = 6.6 Hz, 3H, CH₃), 1.00(m, 1H), 0.980(d, *J* = 6.6 Hz, 3H, CH₃), 0.921(m, 3H) ppm.

¹³C NMR(C₆D₆): δ 23.78, 24.45, 26.63, 27.42, 27.54, 28.96, 34.77, 35.08, 39.01, 67.64, 119.99, 122.89, 124.13, 124.80, 125.36, 125.77, 126.08, 126.46, 126.56, 126.71, 127.58, 128.55, 129.35, 131.84, 134.64, 136.94, 138.77, 141.88, 142.24, 144.97, 146.32, 159.28, 163.74 ppm.

HRMS(EI): *m*/*z* calcd([M⁺] C₄₃H₄₈N₂) 592.3817. Found: 592.3819.

### (ii) Preparation of transition metal compound

A schlenk flask was filled with the ligand compound (0.150 g, 0.253 mmol) in toluene (1.5 g), and n-BuLi (0.17 mL, a 1.6 M solution in hexane, 0.27 mmol) was added thereto dropwisely at room temperature. After stirring for 1 hour, HfCl₄ (0.0814 g, 0.254 mmol) was added thereto as a solid. The reaction mixture was heated at 100°C and stirred for 2 hours. After cooling, MeMgBr (0.29 mL, a 3.1 M solution in diethyl ether, 0.89 mmol) was injected and stirred at room temperature overnight. After removing volatile materials via a vacuum line, the product was extracted with toluene (1.5 g). The extract was filtered by celite filtering. The solvent was removed via a vacuum line, and the residue was triturated in hexane (2 mL) to obtain a yellow solid (0.128 g, 63%).

¹H NMR (C₆D₆): δ 8.58(d, *J* = 7.8 Hz, 1H), 8.29(d, *J* = 8.4 Hz, 1H), 7.79(d, *J* = 7.8 Hz, 1H), 7.71(d, *J* = 7.2 Hz, 1H), 7.54(d, *J*= 7.8 Hz, 1H), 7.46(m, 1H), 7.30(m, 2H), 7.15(m, 3H), 7.09(m, 3H), 6.88(t, *J* = 7.8 Hz, 1H), 6.62(d, *J* = 8.4 Hz, 1H), 6.48(s, 1H, NCH), 3.39(m, 1H), 2.92(m, 2H), 2.15(d, *J* = 13.8 Hz, 1H), 2.10(d, *J* = 13.8 Hz, 2H), 1.80(m, 2H), 1.65(m, 3H), 1.29(m, 6H), 1.17(d, *J* = 7.2 Hz, 3H, CH₃), 1.07(m, 3H), 0.99(s, 3H, HfCH₃), 0.95(m, 2H), 0.73(d, *J*= 7.2 Hz, 3H, CH₃), 0.70(s, 3H, HfCH₃), 0.23(m, 1H) ppm.

¹³C NMR(C₆D₆): δ 23.31, 25.04, 26.63, 26.74, 27.70, 27.76, 27.81, 28.29, 28.89, 35.00, 35.66, 36.62, 37.02, 38.13, 40.88, 62.53, 67.00, 77.27, 119.30, 120.30, 124.29, 125.52, 125.60, 125.97, 126.95, 127.06, 127.73, 129.91, 130.00, 130.09, 130.85, 134.36, 135.80, 140.73, 140.89, 144.02, 145.12, 146.31, 146.38, 146.49, 164.46, 170.79, 206.40 ppm.

Anal. calcd. (C₄₅H₅₂HfN₂): C, 67.61; H, 6.56; N, 3.50%. Found: C, 67.98; H, 6.88; N, 3.19%.

### (2) Preparation of organozinc compound

To 78 ml of diethyl ether, 4-vinylbenzyl chloride (15.0 g, 98.3 mmol) and a magnesium metal (2.628 g, 108.1 mmol) was added and stirred at 0°C for 1.0 hour. Then, filtration on celite was performed to remove excessively added magnesium. p-Tosyl-OCH₂CH₂Cl (19.2 g, 81.9 mmol) dissolved in 27 ml of diethyl ether was added dropwisely to the 4-vinylbenzyl-MgCl Grignard reagent produced above. Stirring was performed overnight, and filtration on celite was performed to remove magnesium chloride tosylate (MgCl(OTs)) that was an insoluble salt. The filter cake thus filtered was washed with 70 ml of hexane three times, and the solvent was removed by a rotary evaporator to obtain 14.2 g of a crude product. T-butylcatechol (43 mg, 3,000 ppm) was added as a radical scavenger, and vacuum distillation was performed at 85°C under full vacuum to obtain a compound represented by Formula 8-4-1 below. As a result of measuring the weight of the compound obtained, yield was 81 wt% (12.0 g), and ¹H NMR and ¹³C NMR spectrums were measured.

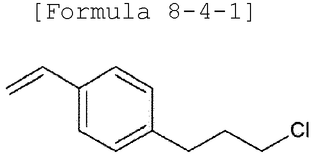

¹H NMR(C₆D₆): δ 7.20 (d, J = 8.4 Hz, 2H), 6.88 (d, J = 8.4 Hz, 2H), 6.61 (dd, J = 16, 9.6 Hz, 1H, =CH), 5.63 (d, J = 16 Hz, 1H, =CH₂), 5.09 (d, J = 9.6 Hz, 1H, =CH₂), 3.04 (t, J = 6.6 Hz, 2H, CH₂), 2.42 (t, J = 6.6 Hz, 2H, CH₂), 1.64 (quintet, J = 6.6 Hz, 2H, CH₂Cl) ppm.

¹³C NMR(C₆D₆): δ 32.61, 34.12, 44.07, 113.13, 126.74, 128.97, 135.99, 137.11, 140.63 ppm.

Then, the compound represented by Formula 8-4-1 thus prepared (4-(3-chloropropyl)styrene, 10.0 g, 55.3 mmol) was dissolved in a mixture solvent of 20 ml of toluene and 7.98 g (111 mmol) of tetrahydrofuran (THF), and added dropwisely to a suspension in which a magnesium powder (2.02 g, 83.0 mmol) was stirred in 40 ml of toluene at room temperature. After stirring for 5.0 hours and a slight heat was slowly generated, the reaction mixture was filtered on celite to remove an excessive amount of magnesium added. Ethyl zinc methoxide (EtZn(OMe), 6.94 g, 55.3 mmol, 1 eq in contrast to Grignard reagent) produced by reacting diethyl zinc (Et₂Zn, 6.83 g, 55.3 mmol) and methanol (1.78 g, 55.3 mmol) in situ in 30 ml of toluene at room temperature for 1.0 hour was added to the filtrate. Then, 60 ml of toluene was added, stirring was performed at room temperature for 1.0 hour, and the solvent was removed using a high vacuum line. Then, 96 g of hexane was added, and magnesium chloride methoxide (MgCl(OMe)) that was an insoluble salt was removed on celite. The filtrate was stored at -30°C to deposit a compound represented by Formula 5-4 as the solid content of a white crystal. As a result of measuring the weight, yield was 56 wt% (7.28 g), and ¹H NMR and ¹³C NMR spectrums were measured.

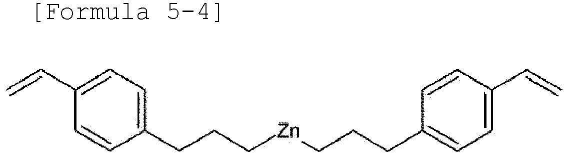

¹H NMR(C₆D₆): δ 7.24 (d, J = 7.8 Hz, 2H), 6.90 (d, J = 7.8 Hz, 2H), 6.64 (dd, J = 17, 11 Hz, 1H, =CH), 5.66 (d, J = 17 Hz, 1H, =CH₂), 5.11 (d, J = 11 Hz, 1H, =CH₂), 2.43 (t, J = 7.2 Hz, 2H, CH₂), 1.80 (quintet, J = 7.2 Hz, 2H, CH₂), -0.19 (t, J = 7.2 Hz, 2H, CH₂Zn) ppm.

¹³C NMR(C₆D₆): δ 12.66, 28.82, 40.09, 113.15, 127.31, 129.23, 136.05, 137.10, 142.91 ppm.

### (3) Preparation of anionic polymerization initiator

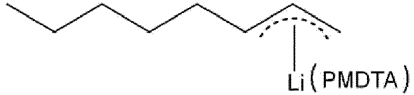

n-BuLi (0.14 mg, 2.2 mmol) was added dropwisely to pentamethyldiethylenetriamine (PMDTA, 0.37 g, 2.2 mmol) in 1-octene (13.0 g). After stirring at room temperature overnight, a yellow solution (0.16 mmol-Li/g) of pentylallyl-Li·(PMDTA) was obtained. An aliquot was analyzed by ¹H NMR spectroscopy. After recording a ¹H NMR spectrum, a C₆D₆ solution was quenched with H₂O (or D₂O) and filtered from a pipette using a short pad of anhydrous MgSO₄, and a ¹H NMR spectrum was re-recorded.

### Preparation of polyolefin-polystyrene-based multiblock copolymer

### Example 1

A parr reactor (3.785 L) was dried in vacuum at 120°C for 2 hours. A solution of MMAO (1.2 mg, 2,020 µmol-Al) in methylcyclohexane (1,200 g) was injected into the reactor as a scavenger. The mixture obtained was stirred at 120°C for 1 hour using a heating jacket, and a solution was removed using a cannula.

The reactor was filled with methylcyclohexane (1,200 g) containing MMAO (2,020 µmol-Al) as a scavenger, and 1-hexene (560 g) was charged as an alpha-olefin monomer, and then, the temperature was set to 90°C. The solution of organozinc compound of Formula 5-4 (2,496 µmol) in methylcyclohexane (5 g) was charged as a chain transfer agent, and a methylcyclohexane solution containing the transition metal compound (12 µmol-Hf) activated with [(C₁₈H₃₇)₂N(H)Me]⁺[B(C₆F₅)₄]⁻ (1.0 eq) in methylcyclohexane was injected. The valve of an ethylene tank was opened, and while maintaining the pressure in the reactor to 25 bar, polymerization was performed for 40 minutes in a range of 90 to 120°C. After polymerization, an ethylene gas was exhausted, and the temperature of the reactor was controlled again to 90°C.

If the temperature reached 90°C, pentylallyl-Li·(PMDTA) (2,600 µmol) in methylcyclohexane (10 g) was added. After maintaining the temperature at 90°C for 30 minutes while stirring, styrene (104 g) was injected. The temperature was controlled in a range of 90 to 100°C using a heating jacket. The viscosity was gradually increased, and within 5 hours, an almost invisible state was attained. An aliquot was taken for the analysis through ¹H NMR spectroscopy. From the ¹H NMR analysis of the aliquot, complete conversion of styrene was confirmed. After the complete conversion of styrene, 2-ethylhexanoic acid and ethanol were continuously injected. The polymer lump thus obtained was dried overnight at 80°C in a vacuum oven.

### Examples 2 to 4

The same method as in Example 1 was performed except for changing the reaction conditions as in Table 1 below.

### Comparative Example 1

G1650 of Kraton Co. was used as a commercially purchased SEBS.

### Comparative Example 2

G1651 of Kraton Co. was used as a commercially purchased SEBS.

### Comparative Example 3

The same method as in Example 1 was performed except for using diethyl zinc instead of the organozinc compound of Formula 5-4 in Example 1 to prepare a polymer.

### Comparative Example 4

Me₃SiCH₂Li (2,600 µmol, 291.4 mg) and PMDETA (2,600 pmol, 537.3 mg) were mixed with methylcyclohexane (20.7 g) and stirred at room temperature for 30 minutes to prepare an anionic polymerization initiator.

The same method as in Example 1 was performed except for using Me₃SiCH₂Li·(PMDETA) instead of pentylallyl-Li·(PMDTA) as the anionic initiator and changing the reaction conditions as in Table 1 below in Example 1 to prepare a multiblock copolymer.

### Comparative Example 5

The same method as in Example 1 was performed except for using Oc₃Al (2962.1 mg, 2,020 µmol-Al/25 wt% in hexane) instead of MMAO as a scavenger and changing the reaction conditions as in Table 1 below in Example 1 to prepare a multiblock copolymer.

**[Table 1]**

| | Cataly st | Scavenger | | Organozinc compound | | Alpha-olefin | | Styr ene | Polymeriz ation initiator | |
|---|---|---|---|---|---|---|---|---|---|---|
| | Inject ion amount (µmol) | Type | (µmo l) | Type | (µmo l) | Typ e | Inje ctio n amou nt (g) | (g) | Typ e | Injec tion amoun t (µmol ) |
| Example 1 | 12 | MMAO | 2,02 0 | Form ula 5-4 | 2,49 6 | 1-hex ene | 560 | 104 | All yl | 2, 600 |
| Example 2 | 12 | MMAO | 1,00 0 | Form ula 5-4 | 3,10 0 | 1-hex ene | 560 | 104 | All yl | 2, 600 |
| Example 3 | 12 | MMAO | 1,00 0 | Form ula 5-4 | 3,72 0 | 1-hex ene | 560 | 109 | All yl | 3,125 |
| Example 4 | 10 | MMAO | 750 | Form ula 5-4 | 3,00 0 | 1-hex ene | 450 | 97 | All yl | 2, 600 |
| Comparative Example 1 | Commercial SEBS (G1650) | | | | | | | | | |
| Comparative Example 2 | Commercial SEBS (G1651) | | | | | | | | | |
| Comparative Example 3 | 10 | MMAO | 749 | Diet hyl zinc | 3,00 0 | 1-hex ene | 430 | 100 | All yl | 2, 600 |
| Comparative Example 4 | 9 | MMAO | 488 | Formula 5-4 | 3,000 | 1- hex ene | 280 | 88 | Silyl | 2, 600 |
| Comparative Example 5 | 12 | TOA | 2,02 0 | Form ula 5-4 | 3,04 0 | 1-hex ene | 560 | 104 | All yl | 2, 600 |

### Experimental Example 1-small angle X-ray scattering

Small angle X-ray scattering (SAXS) was conducted using the u-SAXS beam-line 9A of a Pohang light source. A sample having a specimen type was attached to a sample holder. Measurement for a corresponding specimen was performed at 6.5 m SDD for 5 seconds, and air scattering intensity measured for the same time was used as the background. A 2D image obtained in the experimental example was averaged into a circular type based on beam stop and converted into a 1D image. By using this, each phase of a major phase and a minor phase was supposed, and modelling was performed to obtain a domain size and a distance between domains.

**[Table 2]**

| | Major phase | | | Minor phase | | |
|---|---|---|---|---|---|---|
| | Phase | R (nm) | D1 (nm) | Phase | T (nm) | D2 (nm) |
| Example 1 | Liquid-like ordering phase | 18.7 | 52.3 | Lamellar phase | 3.4 | 12.8 |
| Example 2 | Liquid-like ordering phase | 16.9 | 50.0 | Lamellar phase | 2.6 | 42.3 |
| Example 3 | Liquid-like ordering phase | 16.7 | 50.7 | Lamellar phase | 3.6 | 40.9 |
| Example 4 | Liquid-like ordering phase | 15.5 | 43.3 | Lamellar phase | 3.7 | 24.0 |
| Comparative | Lamellar phase | 9.4 | 35.6 | Lamellar | 13.8 | 32.9 |
| Example 1 | | | | phase | | |
| Comparative Example 2 | Lamellar phase | 17.1 | 58.6 | Lamellar phase | 22.6 | 18.8 |
| Comparative Example 3 | Liquid-like ordering phase | 24.1 | 67.4 | Lamellar phase | 3.6 | 42.1 |
| Comparative Example 4 | Liquid-like ordering phase | 14.6 | 44.7 | Lamellar phase | 3.9 | 13.4 |
| Comparative Example 5 | Liquid-like ordering phase | 14.1 | 46.3 | Lamellar phase | 3.5 | 35.6 |

As shown in Table 2, the multiblock copolymers of the Examples have a liquid-like ordering phase and a lamellar phase, the liquid-like ordering phase has a domain size (R) of 15.0 nm to 22.0 nm, and a distance between domains (D1) of 40.0 nm to 60.0 nm, the lamellar phase has a domain size (T) of 2.0 nm to 9.0 nm and a distance between domains (D2) of 10.0 nm to 50.0 nm. Different from that melt flow rate may be largely degraded to largely deteriorate processability in the case of mixing a common multiblock copolymer with polypropylene, if the multiblock copolymer of the present invention, satisfying such conditions is used for the preparation of a resin composition compound, miscibility with polypropylene may be excellent, the flow properties of the polypropylene may be maintained, and a resin composition compound thus prepared may show excellent flow properties and high melt flow rate to show effects of excellent processability.

### Preparation of resin composition

### Example 1A

To 0.11 parts by weight of the multiblock copolymer of Example 3, 1 part by weight of polypropylene (CB5230, Korea Petrochemical Co.) with a melt index (230°C, 2.16 kg) of 30 g/10 min was added, compounding was performed using a twin-screw extruder to prepare a resin composition compound. In this case, the temperature was 180°C to 200°C, and the screw rotation speed was 100 rpm.

### Example 2A

A resin composition compound was prepared by the same method as in Example 1A except for changing the contents of the multiblock copolymer of Example 3 and the polypropylene to 0.25 parts by weight and 1 part by weight, respectively.

### Example 3A

A resin composition compound was prepared by the same method as in Example 1A except for changing the contents of the multiblock copolymer of Example 3 and the polypropylene to 0.43 parts by weight and 1 part by weight, respectively.

### Example 4A

A resin composition compound was prepared by the same method as in Example 2A except for using the multiblock copolymer of Example 2 instead of the multiblock copolymer of Example 3.

### Comparative Examples 1 to 3

Resin composition compounds were prepared by the same method as in Example 1A except for using the multiblock copolymer of Comparative Example 1 instead of the multiblock copolymer of Example 3.

### Comparative Examples 4 to 7

Resin composition compounds were prepared by the same method as in Example 4A except for using the multiblock copolymers of Comparative Examples 2 to 5 instead of the multiblock copolymer of Example 3.

### Experimental Examples

### (1) Measurement of height of stress change peak (tan δ) in accordance with temperature

On a graph showing the change amount of loss tangent (tan δ) (y-axis) according to temperature obtained by dynamic mechanical analysis (DMA) (x-axis), a y value at a point where a tan δ value was maximum in a range of -80°C to 40°C was measured.

Loss modulus, storage modulus and a tan delta value were measured in a range of -90°C to 100°C with 1 Hz, and 0.1% strain by DMA.

### (2) Measurement of radius (Rv) of a dispersion phase

The radius of a dispersion phase could be measured on a SEM image of the resin composition. From the gaussian distribution of the radius of the dispersion phase measured, a Rv value was obtained.

### (3) Measurement of stress change peak (tan delta peak) temperature

A glass transition temperature (Tg) is the basis index of a material relevant to the physical properties and processability of a polymer, and the temperature showing the tan delta peak value tends to similar to the glass transition temperature (Tg) of a polymer. In this description, the tan delta peak temperature value was utilized.

### (4) Measurement of low temperature impact strength

Each of the resin compositions of Examples 1A to 6A and Comparative Examples 1A to 6A was injected in a mold of 210°C under a pressure of 6 bar for 10 seconds, and based on ASTM D256, a notched type with a size of 63.5 mm × 10.16 mm × 3.2 mm was molded. From the specimen thus manufactured, based on ASTM D256, a pendulum with a load of 0.944 kg was hung using an Izod impact machine model 104 of Tinius Olsen Co., and impact strength at a low temperature (-30°C) was measured.

Particularly, the impact strength at a low temperature (-30°C) was measured by putting the specimen manufactured in a low temperature chamber of which temperature was set to - 30°C, exposing the specimen at -30°C for 12 hours or more, taking out the specimen from the low temperature chamber, and measuring impact strength within 3 seconds.

### (5) Measurement of melt flow rate (MFR, 230°C, 2.16 kg)

Each of resin composition compounds prepared in Examples 2A, 4A and 6A and Comparative Examples 2A, 4A and 6A was recovered, and MFR (230°C, 2.16 kg) was measured according to ASTM-D 1238.

**[Table 3]**

| | Resin composition | Mixing ratio (weight ratio) | Rv (µm) | Tg (°C) | Height of tan δ peak | Low temperatur e (-30°C) impact strength (kgf·m/m) |
|---|---|---|---|---|---|---|
| Example 1A | PP/Example 3 | 1:0.11 | 0.21 | -52 | 0.05 | 4.52 |
| Example 2A | PP/Example 3 | 1:0.25 | 0.25 | -54 | 0.07 | 8.95 |
| Example 3A | PP/Example 3 | 1:0.43 | 0.23 | -52 | 0.08 | 13.64 |
| Example 4A | PP/Example 2 | 1:0.25 | 0.24 | -54 | 0.08 | 9.02 |
| Example 5A | PP/Example 1 | 1:0.25 | 0.25 | -55 | 0.07 | 8.25 |
| Example 6A | PP/Example 4 | 1:0.25 | 0.27 | -49 | 0.11 | 7.81 |
| Comparative Example 1A | PP/Comparati ve Example 2 | 1:0.11 | 0.28 | -43 | 0.05 | 3.74 |
| Comparative Example 2A | PP/Comparati ve Example 2 | 1:0.25 | 0.31 | -54 | 0.05 | 5.64 |
| Comparative Example 3A | PP/Comparati ve Example 2 | 1:0.43 | 0.28 | -52 | 0.06 | 8.46 |
| Comparative Example 4A | PP/Comparati ve Example 3 | 1:0.25 | 1.13 | -41 | 0.03 | 2.76 |
| Comparative Example 5A | PP/Comparati ve Example 4 | 1:0.25 | 0.71 | -43 | 0.05 | 5.22 |
| Comparative Example 6A | PP/Comparati ve Example 5 | 1:0.25 | 0.86 | -50 | 0.04 | 4.13 |

Referring to Table 3, it could be confirmed that, if the same content of the multiblock copolymer is included, the resin compositions of the Examples showed markedly excellent low temperature impact strength when compared to the resin compositions of the Comparative Examples. Particularly, it could be confirmed that, though the same content of the multiblock copolymer is included, markedly high low temperature impact strength was shown by the resin composition of Example 1A when compared to the resin composition of Comparative Example 1A, by the resin compositions of Examples 2A and 4A to 6A when compared to the resin compositions of Comparative Examples 2A and 4A to 6A, and by the resin composition of Example 3A when compared to the resin composition of Comparative Example 3A. In addition, it could be confirmed that the resin compositions of the Examples showed even better effects of impact dissipation and absorption when compared to the resin compositions of the Comparative Examples including the same content of the multiblock copolymer.

It could be confirmed that the resin compositions of the Examples had relatively small radius (Rv) values of a dispersion phase when compared to the resin compositions of the Comparative Examples, and even better dispersion properties are shown. In addition, it could be confirmed that the resin compositions of the Examples had relatively large values of tan δ, and showed even better impact dissipation and absorption properties.

Particularly, if including the same content of the multiblock copolymer, the resin compositions of the Examples showed markedly high values of melt flow rate as confirmed in Table 4 below, while showing markedly high low temperature impact strength when compared to the resin compositions of the Comparative Examples.

**[Table 4]**

| | Multiblock copolymer | PP: Multiblock copolymer (weight ratio) | MFR (230°C, 2.16 kg) |
|---|---|---|---|
| Example 2A | Example 3 | 1:0.25 | 22.7 |
| Example 4A | Example 2 | 1:0.25 | 22.5 |
| Example 5A | Example 1 | 1:0.25 | 23.7 |
| Example 6A | Example 4 | 1:0.25 | 21.2 |
| Comparative Example 2A | Comparative Example 2 | 1:0.25 | 16.9 |
| Comparative Example 4A | Comparative Example 3 | 1:0.25 | 16.6 |
| Comparative Example 6A | Comparative Example 5 | 1:0.25 | 19.4 |

As confirmed in Table 4, the resin compositions of Examples 2A and 4A to 6A, including the multiblock copolymers of Examples 1 to 4 showed markedly high melt flow rate values when compared to the resin compositions of Comparative Examples 2A and 4A to 6A, including the multiblock copolymers of Comparative Examples 2, 3 and 5.

As described above, it could be confirmed that the resin composition of the present invention, including the multiblock copolymer of the present invention together with polypropylene, includes the specific multiblock copolymer of the present invention, and may show excellent processability and markedly excellent low temperature impact strength.

## Claims

1. A multiblock copolymer comprising a polystyrene-based block comprising a repeating unit derived from an aromatic vinyl-based monomer, and a polyolefin-based block comprising a repeating unit derived from ethylene and a repeating unit derived from an alpha-olefin-based monomer, wherein
the multiblock copolymer has a liquid-like ordering phase and a lamellar phase,
the liquid-like ordering phase has a domain size (R) of 15.0 nm to 22.0 nm and a distance between domains (D1) of 40.0 nm to 60.0 nm, and
the lamellar phase has a domain size (T) of 2.0 nm to 9.0 nm and a distance between domains (D2) of 10.0 nm to 50.0 nm, where the domain size and the distance between domains are measured by small angle X-ray scattering.

2. The multiblock copolymer according to claim 1, wherein the multiblock copolymer has the liquid-like ordering phase as a major phase, and the lamellar phase as a minor phase.

3. The multiblock copolymer according to claim 1, wherein the alpha-olefin-based monomer is an alpha-olefin-based monomer of 5 to 20 carbon atoms.

4. The multiblock copolymer according to claim 1, wherein the alpha-olefin-based monomer is one or more selected from the group consisting of 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene and 3,4-dimethyl-1-hexene.

5. The multiblock copolymer according to claim 1, wherein the multiblock copolymer has the domain size (R) of the liquid-like ordering phase of 15.0 nm to 20.0 nm.

6. The multiblock copolymer according to claim 1, wherein the multiblock copolymer has the distance between domains (D1) of the liquid-like ordering phase of 43.0 nm to 56.0 nm.

7. The multiblock copolymer according to claim 1, wherein the multiblock copolymer has the domain size (T) of the lamellar phase of 2.0 nm to 5.0 nm.

8. The multiblock copolymer according to claim 1, wherein the multiblock copolymer has the distance between domains (D2) of the lamellar phase of 12.0 nm to 43.0 nm.

9. A method for preparing the multiblock copolymer of claim 1, the method comprising:
(S1) a step of reacting ethylene and an alpha-olefin-based monomer using an organozinc compound as a chain transfer agent in the presence of a catalyst composition comprising a transition metal compound to prepare a polyolefin-based block; and
(S2) a step of reacting an aromatic vinyl-based monomer and the polyolefin-based block in the presence of an anionic polymerization initiator to prepare a multiblock copolymer.

10. The method for preparing the multiblock copolymer according to claim 9, wherein the transition metal compound is a compound represented by the following Formula 1: 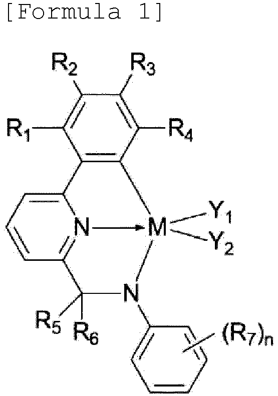 in Formula 1,
M is Ti, Zr or Hf,
R₁ to R₄ are each independently hydrogen, a substituted or unsubstituted alkyl group of 1 to 20 carbon atoms, a substituted or unsubstituted cycloalkyl group of 3 to 20 carbon atoms, or a substituted or unsubstituted aryl group of 6 to 20 carbon atoms, where adjacent two or more among them may be connected to form a ring;
R₅ and R₆ are each independently hydrogen, a substituted or unsubstituted alkyl group of 1 to 20 carbon atoms, a substituted or unsubstituted cycloalkyl group of 3 to 20 carbon atoms, or a substituted or unsubstituted aryl group of 6 to 20 carbon atoms, where the substitution is conducted with an alkyl group of 1 to 12 carbon atoms;
each R₇ is independently a substituted or unsubstituted alkyl group of 4 to 20 carbon atoms, a substituted or unsubstituted cycloalkyl group of 4 to 20 carbon atoms, or a substituted or unsubstituted aryl group of 6 to 20 carbon atoms;
n is 1 to 5; and
Y₁ and Y₂ are each independently a halogen group, an alkyl group of 1 to 20 carbon atoms, an alkenyl group of 2 to 20 carbon atoms, an alkynyl group of 2 to 20 carbon atoms, a cycloalkyl group of 3 to 20 carbon atoms, an aryl group of 6 to 20 carbon atoms, an alkylaryl group of 7 to 20 carbon atoms, an arylalkyl group of 7 to 20 carbon atoms, a heteroaryl group of 5 to 20 carbon atoms, an alkoxy group of 1 to 20 carbon atoms, a substituted or unsubstituted aryloxy group of 5 to 20 carbon atoms, an alkylamino group of 1 to 20 carbon atoms, an arylamino group of 5 to 20 carbon atoms, an alkylthio group of 1 to 20 carbon atoms, an arylthio group of 5 to 20 carbon atoms, an alkylsilyl group of 1 to 20 carbon atoms, an arylsilyl group of 5 to 20 carbon atoms, a hydroxyl group, an amino group, a thiol group, a silyl group, a cyano group, or a nitro group.

11. The method for preparing the multiblock copolymer according to claim 9, wherein the organozinc compound is represented by the following Formula 5: 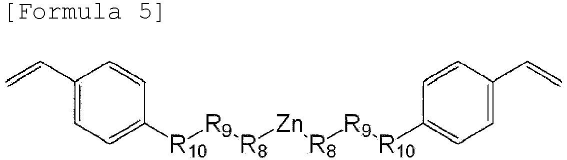 in Formula 5,
R₈ and R₁₀ are each independently a single bond or an alkylene group of 1 to 10 carbon atoms, R₉ is an alkylene group of 1 to 10 carbon atoms or -SiR₁₁R₁₂-, and R₁₁ and R₁₂ are each independently an alkyl group of 1 to 10 carbon atoms.

12. The method for preparing the multiblock copolymer according to claim 9, wherein the anionic polymerization initiator comprises an alkyllithium compound comprising an allyl group, and the allyl group is combined with lithium.

13. The method for preparing the multiblock copolymer according to claim 12, wherein the alkyllithium compound is represented by the following Formula 11: 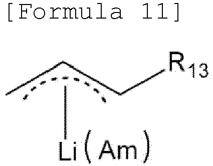 in Formula 11,
R₁₃ is hydrogen or a hydrocarbon group of 1 to 20 carbon atoms, and
A is an amine-based compound represented by the following Formula 12: 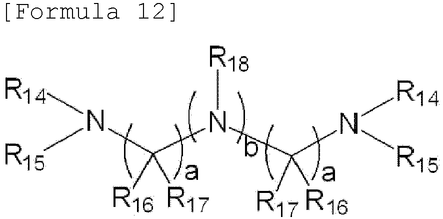
in Formula 12,
R₁₄ to R₁₈ are each independently hydrogen or a hydrocarbon group of 1 to 20 carbon atoms, and
a and b are each independently an integer of 0 to 3, where a and b are not 0 at the same time.

14. A thermoplastic resin composition comprising polypropylene and the multiblock copolymer according to claim 1.

15. The thermoplastic resin composition according to claim 14, wherein the polypropylene and the multiblock copolymer are comprised in a weight ratio of 1:0.1 to 1:9.

16. The thermoplastic resin composition according to claim 14, wherein the thermoplastic resin composition satisfies the following conditions a) to c):
a) a height of a stress change (tan δ) peak in accordance with temperature, derived by dynamic viscoelasticity analysis is 0.02 to 0.13;
b) a radius (Rv) of a dispersion phase is 0.10 um to 0.50 µm; and
c) a glass transition temperature (Tg) is -60°C to -30°C.

17. The thermoplastic resin composition according to claim 16, wherein the thermoplastic resin composition satisfies b) the radius (Rv) of the dispersion phase of 0.10 um to 0.27 um.
